(19) Europäisches Patentamt
European Patent Office
Office européen des brevets

(11) **EP 2 684 638 A1**

(12) **EUROPEAN PATENT APPLICATION**
published in accordance with Art. 153(4) EPC

(43) Date of publication:
**15.01.2014 Bulletin 2014/03**

(51) Int Cl.:
**B23K 35/30** $^{(2006.01)}$ **B23K 9/23** $^{(2006.01)}$
**B23K 35/365** $^{(2006.01)}$ **C22C 38/00** $^{(2006.01)}$
**C22C 38/50** $^{(2006.01)}$

(21) Application number: **12757293.1**

(22) Date of filing: **05.03.2012**

(86) International application number:
**PCT/JP2012/055595**

(87) International publication number:
**WO 2012/124529 (20.09.2012 Gazette 2012/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2011 JP 2011054648**

(71) Applicant: **Kabushiki Kaisha Kobe Seiko Sho (Kobe Steel, Ltd.)**
**Kobe-shi, Hyogo 651-8585 (JP)**

(72) Inventors:
• **NAKO Hidenori**
**Hyogo 651-2271 (JP)**

• **YAMASHITA Ken**
**Kanagawa 251-0014 (JP)**
• **OTSU Minoru**
**Kanagawa 251-0014 (JP)**
• **TANIGUCHI Genichi**
**Kanagawa 251-0014 (JP)**
• **SAKATA Mikihiro**
**Kanagawa 251-0014 (JP)**

(74) Representative: **Müller-Boré & Partner**
**Patentanwälte**
**Grafinger Straße 2**
**81671 München (DE)**

(54) **WELDING METAL HAVING SUPERIOR WELDING EMBRITTLEMENT RESISTANCE CHARACTERISTICS**

(57) This weld metal has a predetermined chemical composition, controls the number of oxides in accordance with size, and has an A value stipulated by the below-mentioned formula of no greater than 5.0. A value= $(100\times[C] - 6\times[insol.Cr] - 2\times[insol.Mo]-24\times[insol.V] -13\times[insol.Nb])\times([Mo]-[insol.Mo])$, where [insol.Cr], [insol.Mo], [insol.Nb], and [insol.V] are contents (in mass percent) of Cr, Mo, Nb, and V, respectively, present as a compound after stress-relief heat treatment, and [C] and [Mo] are contents (in mass percent) of C and Mo, respectively, contained in the weld metal.

EP 2 684 638 A1

**Description**

Technical Field

The present invention relates to weld metals in welding of high-strength steels such as Cr-Mo steels. Specifically, the present invention relates to a weld metal having better temper embrittlement resistance and to a welded structure including the weld metal.

Background Art

High-strength Cr-Mo steels and weld beads (weld metals) thereof to be used in steam boilers and chemical reactors are used in a high-temperature and high-pressure environment. They require not only basic properties such as strength and toughness but also heat resistance (high-temperature strength), stress-relief cracking resistance [resistance to intergranular cracking during a stress-relief heat treatment (SR heat treatment)], and temper embrittlement resistance (resistance to embrittlement during use in a hot environment) at high levels. Recent apparatuses have larger sizes and larger wall thicknesses. Welding on these large-sized apparatuses has been performed with an increasing heat input for better operation efficiency. Such increasing welding heat input generally causes weld beads to have a coarsened microstructure and inferior toughness (inferior temper embrittlement resistance). This requires weld metals of high-strength Cr-Mo steels to have toughness and temper embrittlement resistance at higher and higher levels.

Various techniques have been proposed, which techniques focus on toughness and temper embrittlement resistance of weld metals formed upon welding of high-strength Cr-Mo steels.

Typically, Patent Literature (PTL) 1 discloses a technique relating to a weld metal having properties at certain levels. The weld metal is obtained by minutely specifying chemical compositions of a base steel sheet and of a welding material (welding consumable), and welding conditions. Some working examples according to this technique, however, have unsatisfactory toughness after a temper embrittling treatment (step cooling) in terms of $vTr'_{5.5}$ of at best -41°C, although having satisfactory toughness after a stress relief heat treatment (SR heat treatment) in terms of $vTr_{5.5}$ of -50°C. The term "$vTr'_{5.5}$" refers to a temperature at which a sample after the step cooling has an absorbed energy of 5.5 kgf· m. The term "$vTr_{5.5}$" refers to a temperature at which a sample after the SR heat treatment has an absorbed energy of 5.5 kgf· m.

PTL 2 proposes a technique relating to a coated electrode including a core wire and a coating flux. The technique relationally specifies contents of C, Mn and Ni while maintaining yields of the core wire and the coating at certain levels so as to improve toughness, strength, and heat resistance. The technique, however, fails to give consideration to temper embrittlement resistance.

To provide weld metals that excel in toughness, strength, temper embrittlement resistance, and stress-relief cracking resistance, PTL 3 and PTL 4, for example, propose techniques of specifying chemical compositions of solid wires and bonded fluxes, and welding conditions (heat input). Some working examples according to these techniques have satisfactory toughness both after a SR heat treatment and after a temper embrittling treatment (step cooling). Specifically, they have a $vTr_{55}$ and a $vTr'_{55}$ of each lower than -50°C. The $vTr_{55}$ indicates toughness of a sample after a SR heat treatment and refers to a temperature at which the stress-relieved sample has an absorbed energy of 55 J. The $vTr'_{55}$ indicates toughness of a sample after a temper embrittling treatment (step cooling) and refers to a temperature at which the step-cooled sample has an absorbed energy of 55 J. The working examples, however, each have a difference $\Delta vTr_{55}$ ($=vTr'_{55}-vTr_{55}$) of 8°C or greater. This indicates that the techniques fail to sufficiently suppress temper embrittlement.

PTL 5 proposes a technique of controlling a chemical composition, particularly amounts of impurity elements, of a weld metal to help the weld metal to have better toughness, strength, and stress-relief cracking resistance. The technique, however, fails to give consideration to temper embrittlement resistance.

PTL 6 proposes a technique of controlling chemical compositions of a core wire and a coating flux of a welding electrode for use in shielded metal arc welding to give a weld metal having better toughness and higher strength. The technique, however, fails to give consideration to temper embrittlement resistance. The technique is significantly limited in operation because a designed welding heat input is small.

PTL 7 and PTL 8, for example, propose techniques of controlling chemical compositions of a core wire and a coating flux of a welding electrode for use in shielded metal are welding to give weld metals having better toughness and higher strength. Weld metals according to the techniques have toughness and temper embrittlement resistance both at high levels. In view of recommended welding conditions, however, the techniques fail to sufficiently support increasing welding heat inputs. This is because the technique disclosed in PTL 7 specifies a weld metal in shielded metal are welding and recommends a welding current of about 140 to about 190 A (at a core wire diameter φ of 4.0 mm); and the technique disclosed in PTL 8 specifies a weld metal in submerged arc welding and recommends a heat input of about 2.0 to about 3.6 kJ/mm.

Citation List

Patent Literature

PTL 1:     JP-A No. H02-182378
PTL 2:     JP-A No. H02-220797
PTL 3:     JP-A No. H06-328292
PTL 4:     JP-A No. H08-150478
PTL 5:     JP-A No. 2000-301378
PTL 6:     JP-A No. 2002-263883
PTL 7:     JP-A No. 2008-229718
PTL 8:     JP-A No. 2009-106949

Summary of Invention

Technical Problem

Under these circumstances, an object of the present invention is to provide a weld metal which exhibits satisfactory temper embrittlement resistance and excels in properties such as toughness, stress-relief cracking resistance, and strength even under welding conditions of relatively high heat input. Another object of the present invention is to provide a welded structure including a weld metal of this type.

Solution to Problem

The present invention has achieved the objects and provides a weld metal including: C in a content of 0.05% to 0.15%; Si in a content of 0.1% to 0.50%; Mn in a content of 0.6% to 1.30%; Cr in a content of 1.8% to 3.0%; Mo in a content of 0.80% to 1.20%; V in a content of 0.25% to 0.50%; Nb in a content of 0.010% to 0.050%; N in a content of greater than 0% to 0.025%; and O in a content of 0.020% to 0.060%, in mass percent, in which the weld metal further includes iron and inevitable impurities; oxide particles each having an equivalent circle diameter of greater than 1 $\mu$m are present in a number density of 2000 or less per square millimeter; oxide particles each having an equivalent circle diameter of greater than 2 $\mu$m are present in a number density of 100 or less per square millimeter; and an A value as specified by Formula (1) is 5.0 or less, Formula (1) expressed as follows:

$$A\ value = (100 \times [C] - 6 \times [insol.Cr] - 2 \times [insol.Mo] - 24 \times [insol.V] - 13 \times [insol.Nb]) \times ([Mo] - [insol.Mo]) \qquad (1)$$

where [insol.Cr], [insol.Mo], [insol.Nb], and [insol.V] are contents (in mass percent) of Cr, Mo, Nb, and V, respectively, each present as a compound in the weld metal after a stress relief heat treatment; and [C] and [Mo] are contents (in mass percent) of C and Mo, respectively, in the weld metal.

In preferred embodiments, the weld metal according to the present invention may further include, as an additional element or elements, at least one selected typically from (a) at least one selected from the group consisting of Cu in a content of greater than 0% to 1.0% and Ni in a content of greater than 0% to 1.0%; (b) B in a content of greater than 0% to 0.0050%; (c) W in a content of greater than 0% to 0.50%; (d) Al in a content of greater than 0% to 0.030%; and (e) Ti in a content of greater than 0% to 0.020%. This allows the weld metal to have a better property according to the type of an element to be contained.

The present invention further includes a welded structure including the weld metal. Advantageous Effects of Invention

The present invention specifies a chemical composition of a weld metal and number densities of oxide particles having specific sizes contained in the weld metal. The present invention further appropriately specifies a relationship between contents (in mass percent) of Cr, Mo, Nb, and V each present as a compound after a stress relief heat treatment and contents (in mass percent) of C and Mo in the weld metal. The present invention thereby allows the weld metal to exhibit satisfactory temper embrittlement resistance and to excel in properties such as toughness, stress-relief cracking resistance, and strength. Brief Description of Drawings

[Fig. 1] Fig. 1 is a graph illustrating step cooling process conditions.

[Fig. 2] Fig. 2 is a schematic explanatory drawing illustrating where a tensile specimen is sampled.

[Fig. 3] Fig. 3 is a schematic explanatory drawing illustrating where a Charpy impact specimen is sampled.

[Fig. 4A] Fig. 4A is a schematic explanatory drawing illustrating where a stress-relief cracking resistance specimen is sampled.

[Fig. 4B] Fig. 4B is a schematic explanatory drawing illustrating which shape the stress-relief cracking resistance specimen has.

[Fig. 4C] Fig. 4C is a schematic explanatory drawing illustrating how to sample the stress-relief cracking resistance specimen.

Description of Embodiments

The present inventors made various investigations to provide a weld metal which exhibits satisfactory temper embrittlement resistance and excels in properties such as toughness, stress-relief cracking resistance, and strength even under welding conditions of relatively high heat input. As a result, they have found that a weld metal simultaneously having the properties at satisfactory levels is provided by reducing coarse oxide particles and controlling a total carbon (C) content and a total molybdenum (Mo) content ([C] and [Mo]) and contents of Cr, Mo, Nb, and V present as a compound ([insol.Cr], [insol.Mo], [insol.Nb], and [insol.V]) each in the weld metal after a SR heat treatment. The present invention has been made based on these findings.

Specifically, the present inventors have found that a weld metal having properties represented by toughness and temper embrittlement resistance at satisfactory levels can be provided in the following manner. Specifically, a chemical composition of the weld metal is suitably controlled. Oxide particles having an equivalent circle diameter of greater than 1 $\mu$m in the weld metal are controlled to a number density of 2000 or less per square millimeter (2000 per square millimeter or less). Oxide particles having an equivalent circle diameter of greater than 2 $\mu$m in the weld metal are controlled to a number density of 100 or less per square millimeter (100 per square millimeter or less). In addition, an A value as specified by Formula (1) is controlled to 5.0 or less, Formula (1) expressed as follows:

$$A\ value = (100 \times [C] - 6 \times [insol.Cr] - 2 \times [insol.Mo] - 24 \times [insol.V] - 13 \times [insol.Nb]) \times ([Mo] - [insol.Mo]) \qquad (1)$$

where [insol.Cr], [insol.Mo], [insol.Nb], and [insol.V] are contents (in mass percent) of Cr, Mo, Nb, and V, respectively, present as a compound in the weld metal after a stress relief heat treatment; and [C] and [Mo] are contents (in mass percent) of C and Mo, respectively, in the weld metal.

As used herein the term "equivalent circle diameter" refers to a diameter of an assumed circle having an equivalent area to that of an oxide particle observed on an observation plane under an optical microscope. The contents (in mass percent) of Cr, Mo, Nb, and V, respectively, present as a compound refer to values as obtained by extracted residue analyses. [C] and [Mo] are contents (in mass percent) of C and Mo in the weld metal, which contents do not change between before and after the stress relief heat treatment.

Temper embrittlement resistance of a weld metal is evaluated by subjecting the weld metal to a regular SR heat treatment and subsequently to a so-called step cooling heat treatment and examining how toughness of the step cooled weld metal degrades as compared to an as-stress-relieved weld metal. The present inventors have newly found that fine carbide $Mo_2C$ precipitated upon the step cooling hardens the weld metal due to precipitation hardening and causes toughness degradation. Based on this finding, the present inventors successfully provide a weld metal having satisfactory temper embrittlement resistance. This weld metal is obtained by controlling the A value as specified by Formula (1) to suppress precipitation of $Mo_2C$ to thereby suppress toughness degradation after the step cooling.

The A value as specified by Formula (1) specifies a condition relating to solute carbon and solute molybdenum that contribute to $Mo_2C$ precipitation upon step cooling. The A value thermodynamically indicates driving force of the $Mo_2C$ precipitation. With a decreasing A value, $Mo_2C$ precipitates in a smaller amount. The A value should be controlled to a predetermined level or less so as to give a weld metal having satisfactory temper embrittlement resistance. In view of this, the A value should be 5.0 or less. A weld metal having an A value of more than 5.0 may have poor temper embrittlement resistance due to a larger amount of precipitated $Mo_2C$. The weld metal may have an A value of preferably 4.5 or less, more preferably 4.0 or less, and furthermore preferably 3.5 or less.

Number densities of oxide particles having predetermined sizes are controlled in the weld metal according to the present invention. Control of dimensions of oxide particles in this manner allows the weld metal to have a finer microstructure and better toughness. Thus, oxide particles having an equivalent circle diameter of greater than 1 $\mu$m and those having an equivalent circle diameter of greater than 2 $\mu$m in the weld metal should be reduced to 2000 per square millimeter or less and 100 per square millimeter or less, respectively. Such oxide particles in number densities greater than the upper limits may cause the weld metal to have unsatisfactory toughness. The number density of oxide particles having an equivalent circle diameter of greater than 1 μm is preferably 1500 per square millimeter or less, more preferably 1200 per square millimeter or less, and can be reduced to approximately several hundreds per square millimeter according to the present invention. The number density of oxide particles having an equivalent circle diameter of greater than 2 μm is preferably 60 per square millimeter or less and more preferably 40 per square millimeter or less.

A chemical composition of the weld metal according to the present invention is also importantly suitably controlled. The chemical composition is specified in ranges for reasons as follows.

C: 0.05% to 0.15%

Carbon (C) element is necessary for helping the weld metal to have strength at a certain level. A weld metal having a carbon content of less than 0.05% may fail to have strength at a predetermined level. However, a weld metal having an excessively high carbon content may have unsatisfactory toughness due to coarsened carbides. To prevent this, the weld metal should have a carbon content of 0.15% or less. The carbon content is preferably 0.07% or more and more preferably 0.09% or more in terms of its lower limit; and is preferably 0.13% or less and more preferably 0.12% or less in terms of its upper limit.

Si: 0.1% to 0.50%

Silicon (Si) element effectively helps the weld metal to have better welding workability (weldability). A weld metal having a Si content of less than 0.1% may have insufficient weldability. However, a weld metal having an excessively high Si content may have unsatisfactory toughness due to excessively high strength and increased amounts of hard microstructures such as martensite. To prevent this, the weld metal should have a Si content of 0.50% or less. The Si content is preferably 0.15% or more and more preferably 0.17% or more in terms of its lower limit; and is preferably 0.40% or less and more preferably 0.32% or less in terms of its upper limit.

Mn: 0.6% to 1.30%

Manganese (Mn) element effectively helps the weld metal to have satisfactory strength. A weld metal having a Mn content of less than 0.6% may have insufficient strength at room temperature and may have inferior stress-relief cracking resistance. However, a weld metal having an excessively high Mn content may have an inferior high-temperature strength. To prevent this, the weld metal should have a Mn content of 1.30% or less. The Mn content is preferably 0.8% or more and more preferably 1.0% or more in terms of its lower limit; and is preferably 1.2% or less and more preferably 1.15% or less in terms of its upper limit.

Cr: 1.8% to 3.0%

Chromium (Cr) element in a content of less than 1.8% may invite precipitation of film-like coarse cementite at a prior austenite grain boundary and may cause the weld metal to have inferior stress-relief cracking resistance. However, Cr in an excessively high content may cause coarsened carbides and cause the weld metal to have inferior toughness. To prevent this, the weld metal should have a Cr content of 3.0% or less. The Cr content is preferably 1.9% or more and more preferably 2.0% or more in terms of its lower limit; and is preferably 2.8% or less and more preferably 2.6% or less in terms of its upper limit.

Mo: 0.80% to 1.20%

Molybdenum (Mo) element effectively helps the weld metal to have satisfactory strength. A weld metal having a Mo content of less than 0.80% may fail to have strength at a predetermined level. However, a weld metal having an excessively high Mo content may have inferior toughness due to excessively high strength and may include an increased amount of solute molybdenum after a SR heat treatment. This may cause precipitation of fine $Mo_2C$ during a step cooling and may cause the weld metal to have inferior temper embrittlement resistance. To prevent this, the weld metal should have a Mo content of 1.20% or less. The Mo content is preferably 0.9% or more and more preferably 0.95% or more in terms of its lower limit; and is preferably 1.15% or less and more preferably 1.1% or less in terms of its upper limit.

V: 0.25% to 0.50%

Vanadium (V) element forms a carbide (MC carbide where M is a carbide-forming element) and effectively helps the weld metal to have strength at a certain level. A weld metal having a V content of less than 0.25% may fail to have strength at a predetermined level. However, a weld metal having an excessively high V content may have inferior toughness due to excessively high strength. To prevent this, the weld metal should have a V content of 0.50% or less. The V content is preferably 0.27% or more and more preferably 0.30% or more in terms of its lower limit; and is preferably 0.45% or less and more preferably 0.40% or less in terms of upper limit.

Nb: 0.010% to 0.050%

Niobium (Nb) element forms a carbide (MC carbide) and effectively helps the weld metal to have strength at a certain level. A weld metal having a Nb content of less than 0.010% may fail to have strength at a predetermined level. However, a weld metal having an excessively high Nb content may have unsatisfactory toughness due to excessively high strength. To prevent this, the weld metal should have a Nb content of 0.050% or less. The Nb content is preferably 0.012% or more and more preferably 0.015% or more in terms of its lower limit; and is preferably 0.040% or less and more preferably 0.035% or less in terms of its upper limit.

N: greater than 0% to 0.025%

Nitrogen (N) element effectively helps the weld metal to have a satisfactory creep strength. A weld metal having an excessively high nitrogen content may have unsatisfactory toughness due to excessively high strength. To prevent this, the weld metal should have a nitrogen content of 0.025% or less. To exhibit the abovementioned effects, the nitrogen content is preferably 0.004% or more and more preferably 0.005% or more in terms of its lower limit; and is preferably 0.020% or less and more preferably 0.018% or less in terms of its upper limit.

O: 0.020% to 0.060%

Oxygen (O) element contributes to finer microstructures and effectively helps the weld metal to have better toughness. To exhibit these effects, the weld metal should have an oxygen content of 0.020% or more. However, a weld metal having an excessively high oxygen content of greater than 0.060% may have inferior toughness contrarily, because of increased coarse oxide particles that cause brittle fracture. The oxygen content is preferably 0.025% or more and more preferably 0.028% or more in terms of its lower limit; and is preferably 0.050% or less and more preferably 0.045% or less in terms of its upper limit.

Elements to be contained in the weld metal specified in the present invention are as above. The weld metal may further include iron and inevitable impurities. Elements such as P and S may be brought into the weld metal typically from raw materials, construction materials, and manufacturing facilities. These elements may be contained as the inevitable impurities.

The weld metal according to the present invention may preferably further contain one or more additional elements as selected typically from: (a) Cu in a content of greater than 0% to 1.0% and/or Ni in a content of greater than 0% to 1.0%; (b) B in a content of greater than 0% to 0.0050%; (c) W in a content of greater than 0% to 0.50%; (d) Al in a content of greater than 0% to 0.030%; and (e) Ti in a content of greater than 0% to 0.020%. The weld metal may have a further better property according to the type of an element to be contained. These elements may be contained in amounts specified for reasons as follows.

Cu: greater than 0% to 1.0% and/or Ni: greater than 0% to 1.0%

Copper (Cu) and nickel (Ni) elements help microstructures to be finer and help the weld metal to have better toughness. These elements in excessively high contents, however, may cause the weld metal to have unsatisfactory toughness due to excessively high strength. To prevent this, the Cu and Ni contents are each preferably 1.0% or less, more preferably 0.8% or less, and furthermore preferably 0.5% or less. To exhibit the aforementioned effects, the Cu and Ni contents are each preferably 0.05% or more and more preferably 0.1% or more.

B: greater than 0% to 0.0050%

Boron (B) element suppresses ferrite formation at grain boundaries and effectively helps the weld metal to have higher strength. Boron in an excessively high content, however, may adversely affect the stress-relief cracking resistance of the weld metal. To prevent this, the boron content is preferably 0.0050% or less, more preferably 0.0040% or less, and furthermore preferably 0.0025% or less. To exhibit the aforementioned effects, the boron content is preferably 0.0005% or more and more preferably 0.0010% or more in terms of its lower limit.

W: greater than 0% to 0.50%

Tungsten (W) element effectively helps the weld metal to have higher strength. Tungsten in an excessively high content, however, may cause coarsened carbides precipitated at grain boundaries and adversely affect the toughness of the weld metal. To prevent this, the tungsten content is preferably 0.50% or less, more preferably 0.3% or less, and furthermore preferably 0.2% or less. To exhibit the aforementioned effects, the tungsten content is preferably 0.08% or more and more preferably 0.1% or more in terms of its lower limit.

Al: greater than 0% to 0.030%

Aluminum (Al) element effectively acts as a deoxidizer. Al in an excessively high content, however, may cause coarsened oxide particles and adversely affect the toughness of the weld metal. To prevent this, the Al content is preferably 0.030% or less, more preferably 0.020% or less, and furthermore preferably 0.015% or less. To exhibit the aforementioned effects, the Al content is preferably 0.001% or more and more preferably 0.0012% or more in terms of its lower limit.

Ti: greater than 0% to 0.020%

Titanium (Ti) element effectively helps the weld metal to have higher strength. Ti contained in an excessively high content, however, may accelerate precipitation hardening by a MC carbide, significantly increase intergranular hardening, and cause the weld metal to have insufficient stress-relief cracking resistance. To prevent this, the Ti content is preferably 0.020% or less, more preferably 0.015% or less, and furthermore preferably 0.012% or less. To exhibit the aforementioned effects, the Ti content is preferably 0.005% or more and more preferably 0.008% or more in terms of its lower limit.

A welding technique to give the weld metal according to the present invention is not limited, as long as being an arc welding technique. The welding technique, however, is preferably submerged arc welding (SAW) or shielded metal arc welding (SMAW), because these techniques are often employed in actual welding typically of chemical reactors.

To provide the weld metal according to the present invention, a welding material and welding conditions should be suitably controlled. The chemical composition of the welding material is naturally limited by a required chemical composition of the weld metal. To give predetermined oxide dimensions, suitable control in welding conditions and welding material chemical composition is required.

Typically, SAW is preferably performed at a welding heat input of from 2.5 to 5.0 kJ/mm at a preheating/interpass temperature in welding of from about 190°C to about 250°C. To give the predetermined weld metal by SAW under these conditions, control as follows is preferred. Specifically, a welding wire to be used preferably has a Mo content of 1.3% or less, a V content of 0.36% or more, and a Nb content of 0.012% or more and has a ratio [Mo/(V+Nb)] of 2.8 or less. The ratio is a ratio of the Mo content to the total content of V and Nb. In addition, a bonded flux to be used preferably has a metal calcium content and an $Al_2O_3$ content both satisfying Formula (2) expressed as follows:

$$17/9 \times ([Ca]/[Al_2O_3]) \geq 0.015 \qquad (2)$$

where [Ca] and [$Al_2O_3$] are contents (in mass percent) of metal calcium and $Al_2O_3$, respectively, in the bonded flux

A welding wire having a Mo content, a V content, and/or a Nb content out of the specified range, or having a ratio [Mo/(V+Nb)] of greater than 2.8 may suffer from increased amounts of solute molybdenum and solute carbon after a SR heat treatment, and this may impede control of the A value to 5.0 or less. The Mo content is preferably 1.2% or less and more preferably 1.1% or less. The V content is preferably 0.37% or more and more preferably 0.38% or more. The Nb content is preferably 0.018% or more and more preferably 0.020% or more. The ratio [Mo/(V+Nb)] is preferably 2.7 or less and more preferably 2.6 or less.

A bonded flux having a metal calcium content and an $Al_2O_3$ content not satisfying Formula (2) [17/9$\times$([Ca]/[$Al_2O_3$])<0.015], if used, may cause $Al_2O_3$ oxide to partially remain, which $Al_2O_3$ oxide is liable to be coarsened through aggregation and/or coalescence. This may cause the weld metal to include coarse oxide particles in number densities greater than the predetermined ranges. The left-hand value (17/9$\times$([Ca]/$Al_2O_3$]) is preferably 0.017 or more and more preferably 0.018 or more.

SAW, if performed at a heat input of less than 2.5 kJ/mm or performed at a preheating/interpass temperature of lower than 190°C, may cause an excessively high cooling rate upon welding. This may impede formation of carbides in sufficient amounts during cooling and cause the weld metal to have an A value out of the predetermined range. SAW, if performed at a heat input of more than 5.0 kJ/mm or performed at a preheating/interpass temperature of higher than 250°C, may cause the weld metal to have a coarse microstructure. This may reduce grain boundaries serving as carbide-forming sites, thereby reduce the amounts of carbides formed upon a SR heat treatment, and cause the weld metal to have an A value out of the predetermined range.

SMAW is preferably performed at a welding heat input of 2.3 to 3.0 kJ/mm and at a preheating/interpass temperature upon welding of about 190°C to about 250°C. To give the predetermined weld metal by SMAW under these conditions, control as follows is preferred. A welding electrode is prepared using a core wire and a coating flux. The core wire may have a Mo content of preferably 1.20% or less, more preferably 1.1% or less, and furthermore preferably 1.0% or less. The coating flux may have a V content of preferably 0.85% or more, more preferably 1.0% or more, and furthermore preferably 1.3% or more and a Nb content of preferably 0.10% or more, more preferably 0.11% or more, and further more preferably 0.13% or more. In addition, the coating flux has a MgO content of preferably 2.0% or more.

The Mo content of the core wire, as well as the V and Nb contents of the coating flux are important factors to control the A value within the appropriate range. These values, if out of the above-specified ranges, may increase the amounts of solute molybdenum and solute carbon after a SR heat treatment, and this may impede control of the A value to 5.0 or less. MgO in the coating flux effectively suppresses the formation of coarse oxide particles. While reasons remaining unclear, this is probably because balance between deoxidizing elements and free elements in the weld metal is changed to accelerate the formation of fine oxide particles. To exhibit these effects, the MgO content in the coating flux is preferably 2.0% or more, more preferably 2.1% or more, and furthermore preferably 2.2% or more.

SMAW, if performed at a heat input of less than 2.3 kJ/mm or performed at a preheating/interpass temperature of lower than 190°C, may cause an excessively high cooling rate upon welding. This may impede formation of carbides in sufficient amounts during cooling and cause the weld metal to have an A value out of the predetermined range. SMAW, if performed at a heat input of greater than 3.0 kJ/mm or performed at a preheating/interpass temperature of higher than 250°C, may cause the weld metal to have a coarse microstructure. This may reduce grain boundaries serving as carbide-forming sites, thereby reduce the amounts of carbides formed upon a SR heat treatment, and cause the weld metal to have an A value out of the predetermined range.

A weld metal, when formed under the conditions, exhibits satisfactory temper embrittlement resistance and excels in properties such as toughness, stress-relief cracking resistance, and strength. This provides a welded structure including the weld metal having satisfactory properties.

EXAMPLES

The present invention will be illustrated in further detail with reference to several examples below. It should be noted, however, that the examples are by no means construed to limit the scope of the invention; and various changes and modifications without departing from the spirit and scope of the invention are possible and fall within the scope of the invention.

Weld metals were prepared using a base metal having a chemical composition under welding conditions as follows. The weld metals were subjected to a heat treatment and examined on properties to be evaluated.

Base Metal Chemical Composition (in mass percent):

C of 0.12%, Si of 0.23%; Mn of 0.48%; P of 0.004%; S of 0.005%; Cu of 0.04%; Al of less than 0.002%; Ni of 0.08%; Cr of 2.25%; Mo of 0.99%; V of 0.004%; Ti of 0.002%; and Nb of 0.005%, with the remainder including iron and inevitable impurities

Welding Conditions (SAW)
Welding technique: submerged are welding (SAW)
Base metal thickness: 25 mm
Groove angle: 10° (V groove)
Root opening: 25 mm
Welding position: flat
Wire diameter: 4.0 mm in diameter (wire chemical compositions are given in Tables 1 and 2 below)
Heat input conditions (AC-AC tandem)

i) 2.4kJ/mm (L: 440 A and 25 V; T: 480 A and 27 V,10 mm/sec);
ii) 2.6 kJ/mm (L: 480 A and 25 V; T: 500 A and 28 V,10 mm/sec);
iii) 3.7 kJ/mm (L: 580 A and 30 V; T: 600 A and 32 V, 10 mm/sec);
iv) 4.8 kJ/mm (L: 440 A and 25 V; T: 480 A and 27 V, 5 mm/sec); or
v) 5.2 kJ/mm (L: 480 A and 25 V; T: 500 A and 28 V, 5 mm/sec),

where L represents a leading wire (leading electrode); and T represents a trailing wire (trailing electrode)

Preheating/interpass temperature: 180°C to 260°C
Buildup procedure: one layer, two passes (a total of six layers)

Chemical Composition of Flux to Be Used

Composition A (in mass percent): $SiO_2$ of 8%; $Al_2O_3$ of 14%; MgO of 31%; $CaF_2$ of 27%; CaO of 10%; Ca of 0.13%; and others (e.g., $CO_2$ and $AlF_3$) of 10%

Composition B (in mass percent): $SiO_2$ of 8%; $Al_2O_3$ of 14%; MgO of 31%; $CaF_2$ of 27%; CaO of 10%; Ca of 0.08%; and others (e.g., $CO_2$ and $AlF_3$) of 10%

Welding Conditions (SMAW)
Welding technique: shielded metal arc welding (SMAW)
Base metal thickness: 20 mm
Groove angle: 20° (V groove)
Root opening: 19 mm
Welding position: flat
Core wire diameter: 5.0 mm in diameter (chemical compositions of the coating flux are given in Table 7 below)
Heat input conditions

vi) 2.1 kJ/mm (210 A and 27 V, 2.7
vii) 2.3 kJ/mm (215 A and 27 V, 2.5
viii) 2.7 kJ/mm (215 A and 27 V, 2.2
ix) 3.0 kJ/mm (220 A and 27 V, 2.0 or
x) 3.2 kJ/mm (225 A and 28 V, 2.0 mm/sec)

Preheating/interpass temperature: 180°C to 260°C
Buildup procedure: one layer, two passes (a total of eight layers)

Chemical Composition of Core Wire to Be Used

Composition a (in mass percent): C of 0.09%; Si of 0.15%; Mn of 0.49%; Cu of 0.04%; Ni of 0.03%; Cr of 2.31%; and Mo of 1.10%; with the remainder including iron and inevitable impurities

Composition b (in mass percent): C of 0.08%; Si of 0.18%; Mn of 0.50%; Cu of 0.03%; Ni of 0.03%; Cr of 2.28%; and Mo of 1.22%, with the remainder including iron and inevitable impurities

Heat Treatment

SR Heat Treatment

Each of the prepared weld metals was subjected to a SR heat treatment at 705°C for 8 hours. The SR heat treatment was performed as follows. Each specimen was heated. After the specimen temperature exceeded 300°C, the heating conditions were regulated so that the rate of temperature rise be 55°C per hour (55°C/hr) or less, and the specimen was continuously heated until the specimen temperature reached 705°C. After being held at 705°C for 8 hours, the specimen was cooled down to a specimen temperature of 300°C or lower at a cooling rate of 55°C/hr or less. At specimen temperatures of 300°C or lower, the rate of temperature rise and cooling rate are not specified in the SR heat treatment.

Step Cooling

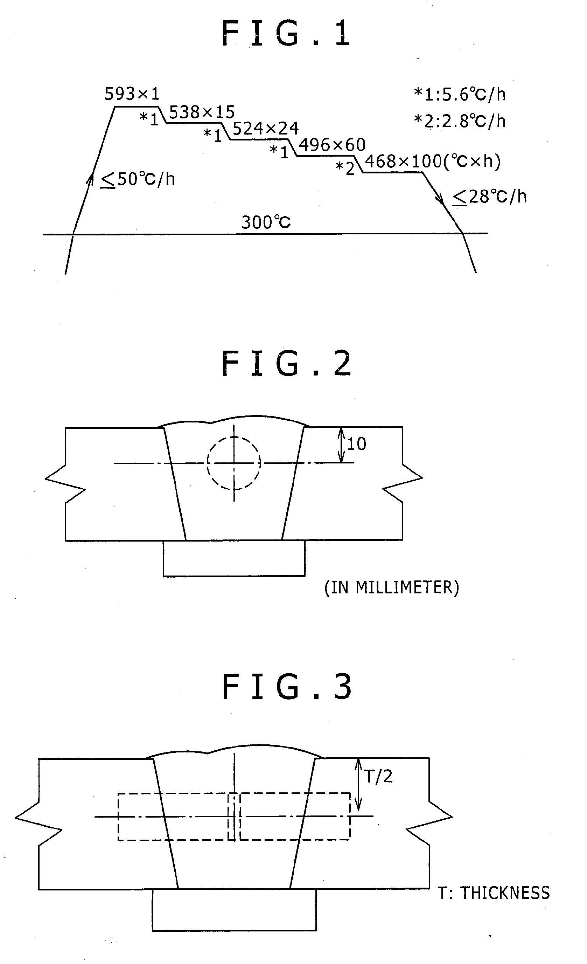

The specimen after the SR heat treatment (stress-relieved specimen) was subjected to step cooling as an embrittlement promotion treatment. Fig. 1 is a graph illustrating step cooling process conditions with the ordinate indicating the temperature; and the abscissa indicating the time. With reference to Fig. 1, the step cooling was performed as follows. The specimen was heated. After the specimen temperature exceeded 300°C, the heating conditions were regulated so that the rate of temperature rise be 50°C per hour (50°C/hr) or less, and the specimen was continuously heated until the specimen temperature reached 593°C and held at that temperature for one hour. The specimen was then held at 538°C for 15 hours, at 524°C for 24 hours, and at 496°C for 60 hours in a similar manner. These cooling steps were performed so that the specimen was cooled at a rate of 5.6°C per hour. The specimen after being held at 496°C was cooled at a rate of cooling of 2.8°C per hour (2.8°C/hr) down to 468°C and held at that temperature for 100 hours. The specimen was then cooled down to a specimen temperature of 300°C or lower at a rate of cooling of 28°C per hour (28°C/hr) or less. The rate of temperature rise and cooling rate at specimen temperatures of 300°C or lower in the step cooling process are not specified as in the SR heat treatment.

Properties to be Evaluated

Number densities of oxide particles having an equivalent circle diameter of greater than 1 $\mu$m and those having an equivalent circle diameter of greater than 2 $\mu$m

A central part in the last pass of the stress-relieved weld metal specimen after the SR heat treatment at 705°C for 8 hours was polished to a mirror-smooth state. Four images of 0.037 $\mu m^2$ of the polished surface were taken at a 1000-fold magnification, and sizes and number densities of oxide particles in the images were determined using an image analysis software ("Image-Pro Plus" supplied by Media Cybernetics, Inc.). Oxide particles having an equivalent circle diameter of greater than 1 $\mu$m and those having an equivalent circle diameter of greater than 2 $\mu$m were selected, and number densities of them were calculated. The number density of oxide particles having an equivalent circle diameter of greater than 2 $\mu$m is included in the number density of oxide particles having an equivalent circle diameter of greater than 1 $\mu$m.

 Contents of Cr, Mo, Nb, and V each present as a compound

A central part in a thickness direction of the stress-relieved weld metal specimen after the SR heat treatment at 705°C for 8 hours was electrolytically extracted with a methanol solution containing 10 percent by volume of acetylacetone and 1 percent by volume of tetramethylammonium chloride, followed by filtration with a filter having a pore diameter of 0.1 $\mu$m to give a residue. The residue was subjected to inductively coupled plasma (ICP) emission spectroscopy to determine contents of Cr, Mo, Nb, and V each present as a compound.

Strength

Each of the prepared weld metals was subjected to a SR heat treatment at 705°C for 32 hours. A tensile specimen was sampled from the stress-relieved weld metal specimen in a weld line direction at a position 10 mm deep from a surface in a thickness direction as illustrated in Fig. 2. The tensile specimen was a #A2 specimen as prescribed in Japanese Industrial Standard (JIS) Z 3111. The tensile specimen was subjected to a tensile test at room temperature (25°C) according to the procedure prescribed in JIS Z 2241 to measure a tensile strength TS. A sample having a tensile strength TS of greater than 600 MPa was evaluated as having superior strength.

Toughness

Each of the prepared weld metals was subjected to a SR heat treatment at 705°C for 8 hours. A Charpy impact specimen was sampled from the stress-relieved weld metal specimen at a central part in a thickness direction in a direction perpendicular to the weld line direction, as illustrated in Fig. 3. The Charpy impact specimen was a #4 V-notched specimen as prescribed in JIS Z 3111. The Charpy impact specimen was subjected to a Charpy impact test according to the procedure specified in JIS Z 2242 to measure an absorbed energy three times. Based on this, a temperature $vTr_{54}$ at which an average of the three measurements of the absorbed energy be 54 J was measured A stress-relieved sample having a $vTr_{54}$ of -50°C or lower was evaluated as having superior toughness. Separately, each of the prepared weld metals was subjected to the SR heat treatment at 705°C for 8 hours and subsequently to the step cooling. On each step-cooled specimen, a temperature $vTr'_{54}$ at which an average of the three measurements of the absorbed energy be 54 J was measured by the above procedure. A step-cooled sample having a $vTr'_{54}$ of -50°C or lower was evaluated as having superior toughness.

Temper Embrittlement Resistance

Based on the above data, a difference $\Delta vTr_{54}$ between $vTr'_{54}$ and $vTr_{54}$ was calculated. A sample having a difference $\Delta vTr_{54}$ of 5°C or lower [$\Delta vTr_{54}=[vTr'_{54}-vTr_{54}]\leq5°C$] was evaluated as having superior temper embrittlement resistance. When a sample has a negative $\Delta vTr_{54}$, it is indicated as "0°C" in the tables. This sample is a superior weld metal that little suffers from temper embrittlement.

Stress-relief Cracking Resistance

Ring crack specimens with a slit of 0.5 mm in size were sampled from a last pass (as welded zone) of each weld metal in the following manner. Specifically, three observation planes were observed as specimens and two tests were performed per one weld metal sample. Namely, a total of six specimens was tested per one sample. The specimens were subjected to a SR heat treatment at 625°C for 10 hours. A sample for which all the six specimens did not suffer from cracking in the vicinity of the notch bottom was evaluated as having superior stress-relief cracking resistance (indicated as "○"); and a sample for which at least one of the six specimens suffered from the cracking was evaluated as having poor stress-relief cracking resistance (indicated as "×").

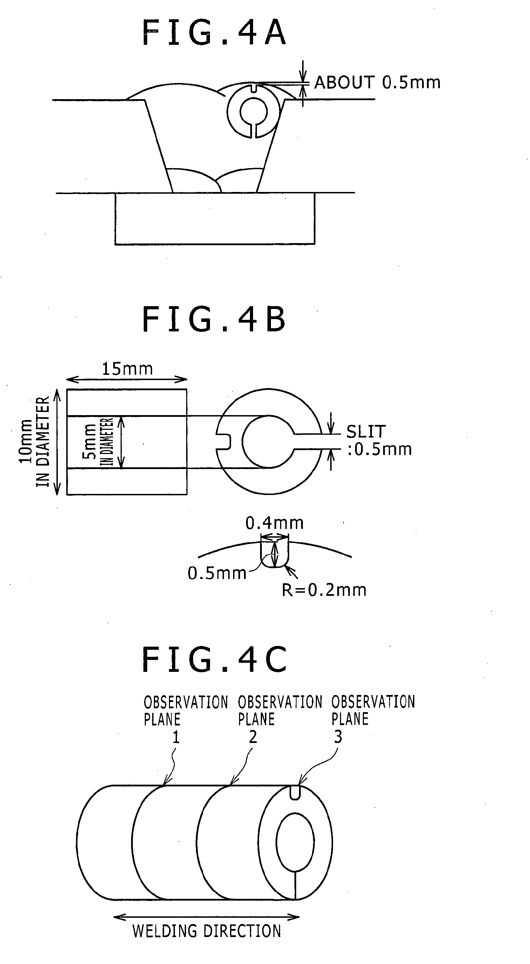

The ring cracking tests to evaluate the stress-relief cracking resistance were performed approximately in the following manner. Fig. 4A illustrates where a specimen was sampled; and Fig. 4B illustrates which dimensions the specimen has. The specimen was sampled immediately below the surface of the last bead so that a microstructure immediately below the U-shaped notch be an as welded zone. The specimen had a slit size (width) of 0.5 mm. The specimen was pressed and narrowed to a slit width of 0.05 mm and TIG-welded at the slit, and a tensile residual stress was applied to the notch bottom. The TIG-welded specimen was subjected to a SR heat treatment in a muffle furnace at 625°C for 10 hours, and the stress-relieved specimen was divided in three equal parts (observation planes 1 to 3) as illustrated in Fig. 4C to sample three ring crack specimens. The ring crack specimens were observed on cross sections thereof (in the vicinity of the notch bottom) under an optical microscope to examine whether or not and how SR cracking occurred.

EXPERIMENTAL EXAMPLE 1

Weld metals were formed by SAW. Chemical compositions and ratios [(Mo/(V+Nb)) of welding wires (W1 to W44) used herein are indicated in Tables 1 and 2 below. Chemical compositions of the formed weld metals with welding conditions and A values are indicated in Tables 3 and 4. The welding conditions are welding wire number, heat input condition, flux to be used, and preheating/interpass temperature. Evaluated properties of the respective weld metals are indicated in Tables 5 and 6. The evaluated properties are number densities of oxide particles having predetermined sizes, tensile strength TS, toughness ($vTr_{54}$ and $vTr'_{54}$), temper embrittlement resistance ($\Delta vTr_{54}$), and stress-relief cracking resistance.

[Table 1]

| Welding wire number | Chemical composition* (in mass percent) of welding wire | | | | | | | | | | | | | | | Mo/(V+Nb) |
|---|---|---|---|---|---|---|---|---|---|---|---|---|---|---|---|---|
| | C | Si | Mn | Cr | Mo | V | Nb | N | O | Cu | Ni | B | W | Al | Ti | |
| W1 | 0.135 | 0.20 | 1.2 | 2.10 | 1.03 | 0.38 | 0.021 | 0.006 | 0.015 | - | - | - | - | - | - | 2.57 |
| W2 | 0.135 | 0.20 | 1.2 | 2.11 | 1.01 | 0.37 | 0.022 | 0.006 | 0.015 | - | - | - | - | - | - | 2.58 |
| W3 | 0.135 | 0.24 | 1.3 | 2.28 | 1.01 | 0.38 | 0.02 | 0.005 | 0.015 | - | - | - | - | - | - | 2.53 |
| W4 | 0.135 | 0.25 | 1.3 | 2.31 | 1.08 | 0.39 | 0.022 | 0.006 | 0.015 | 0.11 | - | - | - | - | - | 2.62 |
| W5 | 0.135 | 0.26 | 1.3 | 2.52 | 1.08 | 0.39 | 0.021 | 0.006 | 0.015 | 0.11 | - | - | - | - | - | 2.63 |
| W6 | 0.135 | 0.20 | 1.2 | 2.30 | 1.05 | 0.38 | 0.022 | 0.006 | 0.015 | 0.12 | - | - | - | - | - | 2.61 |
| W7 | 0.135 | 0.21 | 1.2 | 2.11 | 1.00 | 0.41 | 0.025 | 0.006 | 0.015 | 0.12 | - | - | - | - | - | 2.30 |
| W8 | 0.140 | 0.21 | 1.2 | 2.48 | 1.09 | 0.40 | 0.024 | 0.006 | 0.015 | 0.12 | - | - | - | - | - | 2.57 |
| W9 | 0.140 | 0.19 | 1.2 | 2.10 | 1.06 | 0.39 | 0.025 | 0.006 | 0.015 | - | 0.19 | - | - | - | - | 2.55 |
| W10 | 0.145 | 0.28 | 1.2 | 2.11 | 1.06 | 0.37 | 0.024 | 0.006 | 0.015 | 0.11 | 0.20 | - | - | - | - | 2.69 |
| W11 | 0.140 | 0.27 | 1.2 | 2.35 | 1.00 | 0.38 | 0.024 | 0.006 | 0.015 | 0.11 | - | - | 0.18 | - | - | 2.48 |
| W12 | 0.140 | 0.29 | 1.2 | 2.10 | 1.06 | 0.37 | 0.024 | 0.006 | 0.015 | 0.05 | 0.22 | - | 0.17 | - | - | 2.69 |
| W13 | 0.140 | 0.28 | 1.2 | 2.50 | 1.04 | 0.36 | 0.023 | 0.006 | 0.015 | 0.06 | 0.19 | 0.0025 | - | - | - | 2.72 |
| W14 | 0.09 | 0.20 | 1.0 | 2.29 | 1.10 | 0.38 | 0.031 | 0.006 | 0.015 | 0.12 | - | 0.0025 | - | - | - | 2.68 |
| W15 | 0.170 | 0.20 | 1.3 | 2.50 | 1.06 | 0.43 | 0.038 | 0.006 | 0.015 | 0.11 | - | - | - | - | - | 2.26 |
| W16 | 0.135 | 0.16 | 0.8 | 2.28 | 1.04 | 0.39 | 0.024 | 0.006 | 0.015 | 0.11 | - | 0.0032 | - | - | - | 2.51 |
| W17 | 0.130 | 0.62 | 1.2 | 2.10 | 1.09 | 0.38 | 0.025 | 0.006 | 0.015 | 0.12 | - | - | - | - | - | 2.69 |
| W18 | 0.135 | 0.29 | 1.4 | 2.53 | 1.06 | 0.38 | 0.022 | 0.006 | 0.015 | 0.11 | 0.75 | - | - | - | - | 2.64 |
| W19 | 0.135 | 0.29 | 1.2 | 1.95 | 1.08 | 0.38 | 0.025 | 0.006 | 0.015 | 0.11 | - | - | 0.40 | - | - | 2.67 |
| W20 | 0.135 | 0.28 | 1.2 | 3.10 | 1.06 | 0.37 | 0.024 | 0.006 | 0.015 | 0.92 | - | - | - | - | - | 2.69 |
| W21 | 0.135 | 0.35 | 1.2 | 2.52 | 1.25 | 0.45 | 0.024 | 0.006 | 0.015 | 0.12 | 0.35 | 0.0018 | - | - | - | 2.64 |
| W22 | 0.135 | 0.27 | 1.2 | 2.28 | 1.03 | 0.50 | 0.026 | 0.005 | 0.015 | 0.11 | 0.26 | - | - | - | - | 1.96 |

*Remainder: iron and inevitable impurities

[Table 2]

| Welding wire number | Chemical composition* (in mass percent) of welding wire | | | | | | | | | | | | | | | Mo/(V+Nb) |
|---|---|---|---|---|---|---|---|---|---|---|---|---|---|---|---|---|
| | C | Si | Mn | Cr | Mo | V | Nb | N | O | Cu | Ni | B | W | Al | Ti | |
| W23 | 0.145 | 0.28 | 1.0 | 2.51 | 0.98 | 0.39 | 0.060 | 0.006 | 0.015 | 0.11 | - | - | 0.26 | - | - | 2.18 |
| W24 | 0.135 | 0.38 | 1.0 | 2.88 | 1.06 | 0.37 | 0.016 | 0.027 | 0.015 | 0.11 | 0.22 | - | - | 0.03 | - | 2.75 |
| W25 | 0.135 | 0.38 | 1.2 | 2.28 | 1.11 | 0.45 | 0.012 | 0.006 | 0.026 | 0.11 | 0.05 | - | - | - | 0.020 | 2.40 |
| W26 | 0.135 | 0.29 | 0.8 | 2.30 | 1.06 | 0.38 | 0.024 | 0.013 | 0.015 | 0.11 | - | - | - | - | 0.030 | 2.62 |
| W27 | 0.135 | 0.40 | 1.2 | 2.09 | 0.95 | 0.37 | 0.033 | 0.006 | 0.025 | 0.11 | 1 | - | - | - | - | 2.36 |
| W28 | 0.135 | 0.42 | 1.2 | 2.51 | 1.15 | 0.41 | 0.024 | 0.006 | 0.015 | 0.11 | - | 0.0055 | - | - | - | 2.65 |
| W29 | 0.135 | 0.28 | 1.2 | 2.30 | 0.89 | 0.37 | 0.038 | 0.006 | 0.015 | 0.11 | - | - | - | 0.05 | - | 2.18 |
| W30 | 0.135 | 0.27 | 1.2 | 2.31 | 1.06 | 0.39 | 0.022 | 0.006 | 0.015 | 0.11 | - | - | - | - | 0.045 | 2.57 |
| W31 | 0.080 | 0.28 | 1.2 | 2.51 | 1.04 | 0.37 | 0.020 | 0.006 | 0.015 | 0.11 | - | - | - | - | - | 2.67 |
| W32 | 0.185 | 0.27 | 1.1 | 1.88 | 1.04 | 0.37 | 0.023 | 0.006 | 0.015 | 0.11 | - | - | - | - | - | 2.65 |
| W33 | 0.135 | 0.69 | 0.6 | 2.25 | 1.12 | 0.36 | 0.022 | 0.006 | 0.015 | 0.11 | - | - | - | - | - | 2.93 |
| W34 | 0.135 | 0.28 | 1.5 | 2.30 | 1.05 | 0.40 | 0.024 | 0.006 | 0.015 | 0.11 | - | - | - | - | - | 2.48 |
| W35 | 0.135 | 0.28 | 1.2 | 2.53 | 1.31 | 0.46 | 0.031 | 0.006 | 0.015 | 0.11 | 1.20 | - | - | - | - | 2.67 |
| W36 | 0.140 | 0.28 | 1.2 | 3.30 | 1.36 | 0.46 | 0.031 | 0.006 | 0.015 | 1.20 | - | - | - | - | - | 2.77 |
| W37 | 0.135 | 0.29 | 1.2 | 2.47 | 0.80 | 0.45 | 0.023 | 0.006 | 0.015 | 0.11 | - | - | - | 0.08 | - | 1.69 |
| W38 | 0.135 | 0.30 | 1.2 | 2.15 | 0.85 | 0.27 | 0.038 | 0.006 | 0.015 | 0.11 | - | 0.0065 | - | - | - | 2.76 |
| W39 | 0.135 | 0.35 | 1.2 | 2.31 | 1.04 | 0.58 | 0.020 | 0.006 | 0.015 | 0.11 | - | - | 0.55 | - | - | 1.73 |
| W40 | 0.135 | 0.27 | 1.2 | 2.51 | 1.03 | 0.39 | 0.072 | 0.006 | 0.015 | 0.11 | - | - | - | - | 0.06 | 2.23 |
| W41 | 0.140 | 0.43 | 1.2 | 2.60 | 1.09 | 0.38 | 0.010 | 0.006 | 0.012 | 0.11 | - | - | - | 0.05 | - | 2.79 |
| W42 | 0.135 | 0.27 | 1.2 | 2.10 | 1.06 | 0.39 | 0.013 | 0.034 | 0.015 | 0.11 | - | - | - | - | - | 2.63 |
| W43 | 0.135 | 0.26 | 1.2 | 2.09 | 1.05 | 0.40 | 0.011 | 0.006 | 0.035 | 0.11 | - | - | - | - | - | 2.55 |
| W44 | 0.135 | 0.26 | 1.2 | 2.33 | 0.96 | 0.34 | 0.019 | 0.006 | 0.015 | 0.11 | - | - | - | - | - | 2.67 |

*Remainder: iron and inevitable impurities

[Table 3]

| Test number | Welding wire number | Heat input condition | Flux type | Preheating/ interpass temperature (°C) | Chemical composition** (in mass percent) of weld metal | | | | | | | | | | | | | | | A value |
|---|---|---|---|---|---|---|---|---|---|---|---|---|---|---|---|---|---|---|---|---|
| | | | | | C | Si | Mn | Cr | Mo | V | Nb | N | O | Cu | Ni | B | W | Al | Ti | |
| 1 | W1 | iii | A | 200 | 0.11 | 0.15 | 1.04 | 2.08 | 1.02 | 0.33 | 0.012 | 0.006 | 0.030 | <0.02 | <0.02 | <0.001 | <0.01 | <0.01 | <0.002 | 3.9 |
| 2 | W2 | ii | A | 210 | 0.11 | 0.15 | 1.03 | 2.07 | 1.01 | 0.32 | 0.012 | 0.006 | 0.028 | <0.02 | <0.02 | <0.001 | <0.01 | <0.01 | <0.002 | 3.9 |
| 3 | W3 | iv | A | 210 | 0.10 | 0.18 | 1.12 | 2.24 | 0.98 | 0.33 | 0.014 | 0.006 | 0.032 | <0.02 | <0.02 | <0.001 | <0.01 | <0.01 | <0.002 | 3.3 |
| 4 | W4 | iii | A | 210 | 0.08 | 0.18 | 1.08 | 2.27 | 1.05 | 0.35 | 0.014 | 0.006 | 0.031 | 0.1 | <0.02 | <0.001 | <0.01 | <0.01 | <0.002 | 2.3 |
| 5 | W5 | iii | A | 210 | 0.08 | 0.18 | 1.07 | 2.42 | 1.05 | 0.36 | 0.015 | 0.006 | 0.033 | 0.1 | <0.02 | <0.001 | <0.01 | <0.01 | <0.002 | 2.1 |
| 6 | W6 | iii | A | 190 | 0.11 | 0.15 | 1.04 | 2.2 | 1.00 | 0.33 | 0.013 | 0.006 | 0.031 | 0.1 | <0.02 | <0.001 | <0.01 | <0.01 | <0.002 | 4.0 |
| 7 | W7 | iv | A | 190 | 0.10 | 0.16 | 1.03 | 2.08 | 0.95 | 0.36 | 0.015 | 0.006 | 0.028 | 0.1 | <0.02 | <0.001 | <0.01 | <0.01 | <0.002 | 3.2 |
| 8 | W8 | iv | A | 210 | 0.12 | 0.16 | 1.05 | 2.43 | 1.01 | 0.37 | 0.018 | 0.006 | 0.029 | 0.1 | <0.02 | <0.001 | <0.01 | <0.01 | <0.002 | 4.1 |
| 9 | W9 | iv | A | 210 | 0.12 | 0.17 | 1.03 | 2.02 | 1.00 | 0.35 | 0.018 | 0.006 | 0.029 | <0.02 | 0.15 | <0.001 | <0.01 | <0.01 | <0.002 | 4.5 |
| 10 | W10 | iv | A | 210 | 0.12 | 0.16 | 1.05 | 2.06 | 1.01 | 0.34 | 0.016 | 0.006 | 0.029 | 0.1 | 0.15 | <0.001 | <0.01 | <0.01 | <0.002 | 4.4 |
| 11 | W11 | iii | A | 250 | 0.11 | 0.17 | 1.03 | 2.24 | 0.98 | 0.36 | 0.016 | 0.006 | 0.028 | 0.1 | <0.02 | <0.001 | 0.15 | <0.01 | <0.002 | 3.9 |
| 12 | W12 | iii | A | 210 | 0.12 | 0.16 | 1.00 | 2.03 | 1.05 | 0.35 | 0.016 | 0.006 | 0.031 | 0.04 | 0.2 | <0.001 | 0.15 | <0.01 | <0.002 | 4.4 |
| 13 | W13 | iii | A | 200 | 0.12 | 0.18 | 1.05 | 2.41 | 1.03 | 0.33 | 0.017 | 0.006 | 0.035 | 0.06 | 0.15 | 0.0018 | <0.01 | <0.01 | <0.002 | 4.8 |
| 14 | W14 | iv | A | 190 | 0.06 | 0.15 | 0.85 | 2.22 | 1.00 | 0.33 | 0.024 | 0.006 | 0.041 | 0.1 | <0.02 | 0.0018 | <0.01 | <0.01 | <0.002 | 1.1 |
| 15 | W15 | iii | A | 220 | 0.15 | 0.15 | 1.05 | 2.4 | 1.02 | 0.41 | 0.033 | 0.006 | 0.025 | 0.1 | <0.02 | <0.001 | <0.01 | <0.01 | <0.002 | 4.8 |
| 16 | W16 | iv | A | 200 | 0.12 | 0.12 | 0.69 | 2.24 | 1.00 | 0.35 | 0.016 | 0.006 | 0.036 | 0.1 | <0.02 | 0.0027 | <0.01 | <0.01 | <0.002 | 4.5 |
| 17 | W17 | iii | A | 210 | 0.07 | 0.43 | 1.10 | 2.03 | 0.99 | 0.35 | 0.018 | 0.006 | 0.026 | 0.1 | <0.02 | <0.001 | <0.01 | <0.01 | <0.002 | 1.5 |
| 18 | W18 | iii | A | 220 | 0.11 | 0.21 | 1.22 | 2.48 | 1.00 | 0.35 | 0.016 | 0.006 | 0.027 | 0.1 | 0.71 | <0.001 | <0.01 | <0.01 | <0.002 | 3.7 |

14

(continued)

| Test number | Welding wire number | Heat input condition | Flux type | Preheating/ interpass temperature (°C) | Chemical composition** (in mass percent) of weld metal | | | | | | | | | | | | | | | | A value |
|---|---|---|---|---|---|---|---|---|---|---|---|---|---|---|---|---|---|---|---|---|---|
| | | | | | C | Si | Mn | Cr | Mo | V | Nb | N | O | Cu | Ni | B | W | Al | Ti | |
| 19 | W19 | iii | A | 220 | 0.09 | 0.18 | 1.08 | 1.88 | 1.05 | 0.36 | 0.016 | 0.006 | 0.032 | 0.09 | <0.02 | <0.001 | 0.35 | <0.01 | <0.002 | 3.6 |
| 20 | W20 | iii | A | 220 | 0.10 | 0.19 | 1.03 | 2.87 | 1.00 | 0.35 | 0.016 | 0.006 | 0.031 | 0.82 | <0.02 | <0.001 | <0.01 | <0.01 | <0.002 | 3.1 |
| 21 | W21 | iv | A | 220 | 0.10 | 0.25 | 1.03 | 2.42 | 1.17 | 0.42 | 0.016 | 0.006 | 0.029 | 0.1 | 0.33 | 0.0012 | <0.01 | <0.01 | <0.002 | 4.6 |
| 22 | W22 | iv | A | 220 | 0.08 | 0.19 | 1.06 | 2.21 | 1.02 | 0.47 | 0.018 | 0.006 | 0.028 | 0.1 | 0.25 | <0.001 | <0.01 | <0.01 | <0.002 | 2.0 |
| 23 | W23 | iii | A | 230 | 0.13 | 0.19 | 0.85 | 2.4 | 0.95 | 0.35 | 0.043 | 0.006 | 0.026 | 0.1 | <0.02 | <0.001 | 0.25 | <0.01 | <0.002 | 4.4 |
| 24 | W24 | iii | A | 230 | 0.10 | 0.32 | 0.85 | 2.67 | 1.00 | 0.36 | 0.013 | 0.022 | 0.027 | 0.1 | 0.2 | <0.001 | <0.01 | 0.015 | <0.002 | 4.6 |
| 25 | W25 | iii | A | 220 | 0.10 | 0.31 | 1.05 | 2.22 | 1.06 | 0.41 | 0.011 | 0.006 | 0.051 | 0.1 | 0.04 | <0.001 | <0.01 | <0.01 | 0.006 | 4.6 |
| **Remainder iron and inevitable impurities | | | | | | | | | | | | | | | | | | | | |

[Table 4]

| Test number | Welding wire number | Heat input condition | Flux type | Preheating/interpass temperature (°C) | Chemical composition** (in mass percent) of weld metal | | | | | | | | | | | | | | | A value |
|---|---|---|---|---|---|---|---|---|---|---|---|---|---|---|---|---|---|---|---|---|
| | | | | | C | Si | Mn | Cr | Mo | V | Nb | N | O | Cu | Ni | B | W | Al | Ti | |
| 26 | W26 | iv | A | 240 | 0.09 | 0.18 | 0.74 | 2.26 | 1.02 | 0.35 | 0.016 | 0.011 | 0.030 | 0.1 | <0.02 | <0.001 | <0.01 | <0.01 | 0.012 | 2.9 |
| 27 | W27 | iv | A | 200 | 0.10 | 0.35 | 1.04 | 1.99 | 0.92 | 0.36 | 0.029 | 0.006 | 0.036 | 0.1 | 0.85 | <0.001 | <0.01 | <0.01 | <0.002 | 3.2 |
| 28 | W28 | iii | A | 210 | 0.09 | 0.38 | 1.10 | 2.46 | 1.12 | 0.38 | 0.016 | 0.006 | 0.027 | 0.1 | <0.02 | 0.0042 | <0.01 | <0.01 | <0.002 | 4.3 |
| 29 | W29 | iii | A | 210 | 0.09 | 0.19 | 1.04 | 2.24 | 0.85 | 0.35 | 0.033 | 0.006 | 0.023 | 0.1 | <0.02 | <0.001 | <0.01 | 0.022 | <0.002 | 2.4 |
| 30 | W30 | iii | A | 210 | 0.09 | 0.18 | 1.07 | 2.23 | 1.05 | 0.36 | 0.016 | 0.005 | 0.025 | 0.1 | <0.02 | <0.001 | <0.01 | <0.01 | 0.016 | 3.0 |
| 31 | W1 | i | A | 210 | 0.11 | 0.16 | 1.08 | 2.09 | 1.02 | 0.33 | 0.013 | 0.006 | 0.031 | <0.02 | <0.02 | <0.001 | <0.01 | <0.01 | <0.002 | 5.3 |
| 32 | W1 | v | A | 210 | 0.10 | 0.15 | 1.03 | 2.09 | 1.00 | 0.33 | 0.012 | 0.006 | 0.029 | <0.02 | <0.02 | <0.001 | <0.01 | <0.01 | <0.002 | 5.2 |
| 33 | W1 | iii | A | 180 | 0.11 | 0.16 | 1.05 | 2.07 | 1.03 | 0.33 | 0.012 | 0.006 | 0.030 | <0.02 | <0.02 | <0.001 | <0.01 | <0.01 | <0.002 | 5.1 |
| 34 | W1 | iii | A | 260 | 0.10 | 0.15 | 1.07 | 2.08 | 1.01 | 0.35 | 0.013 | 0.006 | 0.033 | <0.02 | <0.02 | <0.001 | <0.01 | <0.01 | <0.002 | 5.2 |
| 35 | W1 | iii | B | 210 | 0.10 | 0.17 | 1.05 | 2.08 | 1.03 | 0.34 | 0.013 | 0.006 | 0.035 | <0.02 | <0.02 | <0.001 | <0.01 | <0.01 | <0.002 | 3.7 |
| 36 | W31 | iii | A | 200 | 0.04 | 0.19 | 1.03 | 2.41 | 1.01 | 0.31 | 0.015 | 0.006 | 0.042 | <0.02 | <0.02 | <0.001 | <0.01 | <0.01 | <0.002 | 0.2 |
| 37 | W32 | iii | A | 200 | 0.16 | 0.18 | 0.98 | 1.76 | 1.02 | 0.32 | 0.018 | 0.005 | 0.027 | 0.1 | <0.02 | <0.001 | <0.01 | <0.01 | <0.002 | 6.6 |
| 38 | W33 | iv | A | 200 | 0.10 | 0.52 | 0.55 | 2.2 | 1.08 | 0.32 | 0.016 | 0.006 | 0.049 | 0.1 | <0.02 | <0.001 | <0.01 | <0.01 | <0.002 | 5.2 |
| 39 | W34 | iii | A | 200 | 0.11 | 0.18 | 1.32 | 2.26 | 1.02 | 0.35 | 0.018 | 0.006 | 0.035 | 0.1 | <0.02 | <0.001 | <0.01 | <0.01 | <0.002 | 4.3 |
| 40 | W35 | iii | A | 210 | 0.11 | 0.17 | 1.02 | 2.41 | 1.18 | 0.4 | 0.024 | 0.006 | 0.031 | 0.1 | 1.1 | <0.001 | <0.01 | <0.01 | <0.002 | 5.1 |
| 41 | W36 | iv | A | 210 | 0.12 | 0.17 | 1.01 | 3.08 | 1.25 | 0.41 | 0.024 | 0.006 | 0.033 | 1.05 | <0.02 | <0.001 | <0.01 | <0.01 | <0.002 | 5.4 |
| 42 | W37 | iv | A | 210 | 0.09 | 0.18 | 1.06 | 2.38 | 0.77 | 0.41 | 0.017 | 0.006 | 0.026 | 0.1 | <0.02 | <0.001 | <0.01 | 0.032 | <0.002 | 2.1 |
| 43 | W38 | iii | A | 220 | 0.10 | 0.21 | 1.06 | 2.08 | 0.82 | 0.24 | 0.03 | 0.006 | 0.036 | 0.1 | <0.02 | 0.0053 | <0.01 | <0.01 | <0.002 | 5.1 |

(continued)

| Test number | Welding wire number | Heat input condition | Flux type | Preheating/ interpass temperature (°C) | Chemical composition** (in mass percent) of weld metal | | | | | | | | | | | | | | | A value |
|---|---|---|---|---|---|---|---|---|---|---|---|---|---|---|---|---|---|---|---|---|
| | | | | | C | Si | Mn | Cr | Mo | V | Nb | N | O | Cu | Ni | B | W | Al | Ti | |
| 44 | W39 | iv | A | 200 | 0.09 | 0.25 | 1.06 | 2.25 | 1.00 | 0.53 | 0.015 | 0.006 | 0.031 | 0.1 | <0.02 | <0.001 | 0.53 | <0.01 | <0.002 | 2.1 |
| 45 | W40 | iv | A | 200 | 0.10 | 0.18 | 1.05 | 2.46 | 1.00 | 0.35 | 0.053 | 0.006 | 0.030 | 0.1 | <0.02 | <0.001 | <0.01 | <0.01 | 0.022 | 3.1 |
| 46 | W41 | iv | A | 220 | 0.12 | 0.38 | 1.11 | 2.56 | 1.06 | 0.35 | 0.008 | 0.006 | 0.018 | 0.1 | <0.02 | <0.001 | <0.01 | 0.022 | <0.002 | 5.1 |
| 47 | W42 | iv | A | 210 | 0.10 | 0.18 | 1.12 | 2.06 | 1.02 | 0.34 | 0.011 | 0.026 | 0.029 | 0.1 | <0.02 | <0.001 | <0.01 | <0.01 | <0.002 | 4.6 |
| 48 | W43 | iii | A | 220 | 0.10 | 0.19 | 1.10 | 2.05 | 1.02 | 0.35 | 0.010 | 0.006 | 0.062 | 0.1 | <0.02 | <0.001 | <0.01 | <0.01 | <0.002 | 5.4 |
| 49 | W44 | iv | A | 220 | 0.10 | 0.18 | 1.10 | 2.21 | 0.91 | 0.31 | 0.015 | 0.006 | 0.033 | 0.1 | <0.02 | <0.001 | <0.01 | <0.01 | <0.002 | 5.1 |
| **Remainder: iron and inevitable impurities | | | | | | | | | | | | | | | | | | | | |

[Table 5]

| Test number | Number density (per square millimeter) of oxide particles of greater than 1 μm | Number density (per square millimeter) of oxide particles of greater than 2 μm | TS [MPa] | $vTr_{54}$ | $vTr'_{54}$ | $\Delta vTr_{54}$ | Stress-relief cracking resistance |
|---|---|---|---|---|---|---|---|
| 1 | 1122 | 14 | 643 | -59 | -56 | 3 | ○ |
| 2 | 1020 | 0 | 650 | -60 | -57 | 3 | ○ |
| 3 | 1108 | 20 | 628 | -58 | -56 | 2 | ○ |
| 4 | 1209 | 14 | 631 | -58 | -57 | 1 | ○ |
| 5 | 1216 | 27 | 656 | -54 | -55 | 0 | ○ |
| 6 | 1236 | 14 | 654 | -57 | -53 | 4 | ○ |
| 7 | 1007 | 7 | 641 | -60 | -57 | 3 | ○ |
| 8 | 1054 | 7 | 648 | -59 | -56 | 3 | ○ |
| 9 | 1014 | 0 | 647 | -57 | -54 | 3 | ○ |
| 10 | 1074 | 14 | 653 | -55 | -53 | 2 | ○ |
| 11 | 1041 | 0 | 660 | -54 | -52 | 2 | ○ |
| 12 | 1236 | 20 | 664 | -53 | -50 | 3 | ○ |
| 13 | 1291 | 34 | 658 | -54 | -50 | 4 | ○ |
| 14 | 1385 | 47 | 617 | -57 | -59 | 0 | ○ |
| 15 | 1007 | 0 | 692 | -54 | -50 | 4 | ○ |
| 16 | 1338 | 34 | 619 | -55 | -52 | 3 | ○ |
| 17 | 946 | 0 | 634 | -52 | -52 | 0 | ○ |
| 18 | 1047 | 0 | 672 | -54 | -50 | 4 | ○ |
| 19 | 1209 | 27 | 645 | -53 | -50 | 3 | ○ |
| 20 | 1182 | 14 | 667 | -52 | -50 | 2 | ○ |
| 21 | 1014 | 14 | 662 | -54 | -50 | 4 | ○ |
| 22 | 1027 | 7 | 646 | -52 | -52 | 0 | ○ |
| 23 | 959 | 0 | 667 | -52 | -50 | 2 | ○ |
| 24 | 912 | 34 | 672 | -53 | -50 | 3 | ○ |
| 25 | 1831 | 95 | 618 | -54 | -50 | 4 | ○ |

[Table 6]

| Test number | Number density (per square millimeter) of oxide particles of greater than 1 μm | Number density (per square millimeter) of oxide particles of greater than 2 μm | TS (MPa) | $vTr_{54}$ | $vTr'_{54}$ | $\Delta vTr_{54}$ | Stress-relief cracking resistance |
|---|---|---|---|---|---|---|---|
| 26 | 1054 | 27 | 615 | -60 | -59 | 1 | ○ |
| 27 | 1338 | 47 | 679 | -51 | -50 | 1 | ○ |

(continued)

| Test number | Number density (per square millimeter) of oxide particles of greater than 1 μm | Number density (per square millimeter) of oxide particles of greater than 2 μm | TS (MPa) | $vTr_{54}$ | $vTr'_{54}$ | $\Delta vTr_{54}$ | Stress-relief cracking resistance |
|---|---|---|---|---|---|---|---|
| 28 | 1122 | 14 | 657 | -54 | -51 | 3 | ○ |
| 29 | 412 | 68 | 618 | -51 | -51 | 0 | ○ |
| 30 | 932 | 0 | 646 | -58 | -57 | 1 | ○ |
| 31 | 1115 | 47 | 653 | -59 | -51 | 8 | ○ |
| 32 | 1088 | 14 | 622 | -61 | -54 | 7 | ○ |
| 33 | 1135 | 20 | 642 | -60 | -51 | 9 | ○ |
| 34 | 1264 | 34 | 621 | -61 | -52 | 9 | ○ |
| 35 | 1351 | 108 | 633 | -48 | -45 | 3 | ○ |
| 36 | 1385 | 47 | 589 | -62 | -65 | 0 | ○ |
| 37 | 1041 | 0 | 704 | -29 | -17 | 12 | × |
| 38 | 1480 | 54 | 594 | -44 | -36 | 8 | × |
| 39 | 1351 | 34 | 662 | -51 | -44 | 7 | ○ |
| 40 | 1068 | 20 | 688 | -41 | -33 | 8 | ○ |
| 41 | 980 | 20 | 699 | -25 | -15 | 10 | ○ |
| 42 | 865 | 122 | 593 | -33 | -31 | 2 | ○ |
| 43 | 1311 | 41 | 598 | -51 | -42 | 9 | × |
| 44 | 1061 | 14 | 687 | -36 | -35 | 1 | ○ |
| 45 | 1041 | 7 | 679 | -38 | -35 | 3 | × |
| 46 | 284 | 74 | 585 | -47 | -40 | 7 | ○ |
| 47 | 1054 | 14 | 694 | -41 | -37 | 4 | ○ |
| 48 | 2061 | 115 | 607 | -43 | -30 | 13 | ○ |
| 49 | 1203 | 27 | 626 | -57 | -50 | 7 | ○ |

Tables 1 to 6 indicate as follows, in which numbers (Nos.) are the test numbers given in Tables 3 to 6. Nos. 1 to 30 were samples satisfying conditions specified in the present invention and gave weld metals which exhibited satisfactory temper embrittlement resistance and excelled in properties such as toughness, stress-relief cracking resistance, and strength.

By contrast, Nos. 31 to 49 were samples not satisfying at least one of the conditions specified in the present invention and were inferior in at least one of the properties. Specifically, No. 31 gave a weld metal having a high A value due to the heat input condition (heat input of 2.4 kJ/mm). This weld metal had poor temper embrittlement resistance. No. 32 gave a weld metal having a high A value due to the heat input condition (heat input of 5.2 kJ/mm). This weld metal had poor temper embrittlement resistance.

No. 33 gave a weld metal having a high A value due to a preheating/interpass temperature lower than the appropriate range. This weld metal had poor temper embrittlement resistance. No. 34 gave a weld metal having a high A value due to a preheating/interpass temperature higher than the appropriate range. This weld metal had poor temper embrittlement resistance.

No. 35 employed a flux having the composition B in which the contents of metal calcium and $Al_2O_3$ did not satisfy the condition as specified by Formula (2). This sample gave a weld metal having larger number densities of coarse oxide particles and having unsatisfactory toughness ($vTr_{52}$ and $vTr'_{54}$). No. 36 gave a weld metal having an insufficient carbon content. This weld metal had an insufficient strength.

No. 37 gave a weld metal having an excessively high carbon content and a high A value. This weld metal was inferior in toughness (vTr$_{54}$ and vTr'$_{54}$), temper embrittlement resistance ($\Delta$vTr$_{54}$), and stress-relief cracking resistance. No. 38 employed a welding wire having a high ratio[Mo/(V+Nb)] of 2.93 and gave a weld metal having an excessively high Si content, an insufficient Mn content, and a high A value. This weld metal had an insufficient strength and was inferior in all the toughness (vTr$_{54}$ and vTr'$_{54}$), temper embrittlement resistance ($\Delta$vTr$_{54}$), and stress-relief cracking resistance.

No. 39 gave a weld metal having an excessively high Mn content. This weld metal was inferior in toughness (vTr'$_{54}$) and temper embrittlement resistance ($\Delta$vTr$_{54}$). No. 40 gave a weld metal having an excessively high Ni content and a high A value and was inferior in toughness (vTr$_{54}$ and vTr'$_{54}$) and temper embrittlement resistance ($\Delta$vTr$_{54}$).

No. 41 gave a weld metal having excessively high Cr, Mo, and Cu contents and a high A value. This weld metal was inferior in toughness (vTr$_{54}$ and vTr'$_{54}$) and temper embrittlement resistance ($\Delta$vTr$_{54}$). No. 42 gave a weld metal having an insufficient Mo content and an excessively bigh Al content. This weld metal had high number densities of coarse oxide particles and had an insufficient strength and unsatisfactory toughness (vTr$_{54}$ and vTr'$_{54}$). No. 43 gave a weld metal having an insufficient V content and an excessively high boron content due to the composition of the welding wire and having a high A value. This weld metal had an insufficient strength and was inferior in toughness (vTr'$_{54}$), temper embrittlement resistance ($\Delta$vTr$_{54}$), and stress-relief cracking resistance.

No. 44 gave a weld metal having excessively high V and W contents. This weld metal had poor toughness (vTr$_{54}$ and vTr'$_{54}$). No. 45 gave a weld metal having excessively high Nb and Ti contents. This weld metal was inferior in toughness (vTr$_{54}$ and vTr'$_{54}$) and stress-relief cracking resistance.

No. 46 gave a weld metal having insufficient Nb and O contents due to the composition of the welding wire and having a high A value. This weld metal had an insufficient strength and was inferior in toughness (vTr$_{54}$ and vTr'$_{54}$) and temper embrittlement resistance ($\Delta$vTr$_{54}$). No. 47 gave a weld metal having an excessively high N content. This weld metal had unsatisfactory toughness (vTr$_{54}$ and vTr'$_{54}$).

No. 48 gave a weld metal having an excessively high O content and a high A value. This weld metal suffered from large number densities of coarse oxide particles and was inferior in toughness (vTr$_{54}$ and vTr'$_{54}$) and temper embrittlement resistance ($\Delta$vTr$_{54}$). No. 49 gave a weld metal having a high A value. This weld metal had poor temper embrittlement resistance ($\Delta$vTr$_{54}$).

EXPERIMENTAL EXAMPLE 2

Weld metals were formed by SMAW. Chemical compositions of coating fluxes (coating fluxes No. B1 to B24) used herein are indicated in Table 7 below. Chemical compositions of the formed weld metals as well as welding conditions and A values are indicated in Table 8. The welding conditions are coating flux number, heat input condition, core wire type, and preheating/interpass temperature. Evaluated properties of the weld metals are indicated in Table 9. The properties are number densities of oxide particles having predetermined sizes, tensile strength TS, toughness (vTr$_{54}$ and vTr'$_{54}$), temper embrittlement resistance ($\Delta$vTr$_{54}$), and stress-relief cracking resistance.

[Table 7]

| Coating flux number | Chemical composition (in mass percent) of coating flux | | | | | | | | | | | | | | | |
| --- | --- | --- | --- | --- | --- | --- | --- | --- | --- | --- | --- | --- | --- | --- | --- | --- |
| | CaO | $CO_2$ | $CaF_2$ | C | Si | Mn | Cr | Mo | V | Nb | B | W | Al | Ti | MgO | Others |
| B1 | 23 | 22 | 21 | 0.085 | 3.4 | 2.6 | 0.8 | - | 1.01 | 0.113 | 0.06 | - | 0.09 | 0.004 | 2.28 | Remainder |
| B2 | 23 | 22 | 21 | 0.200 | 3.4 | 2.6 | 0.5 | - | 1.02 | 0.114 | 0.06 | - | 0.09 | 0.004 | 2.30 | Remainder |
| B3 | 23 | 22 | 21 | 0.155 | 3.4 | 2.6 | 0.2 | - | 1.04 | 0.116 | 0.06 | - | 0.09 | 0.004 | 2.29 | Remainder |
| B4 | 23 | 22 | 21 | 0.080 | 3.4 | 2.4 | 0.8 | - | 1.06 | 0.111 | 0.06 | - | 0.09 | 0.004 | 2.28 | Remainder |
| B5 | 23 | 22 | 21 | 0.155 | 3.4 | 2.4 | 1.4 | - | 0.96 | 0.132 | 0.06 | - | 0.09 | 0.004 | 2.29 | Remainder |
| B6 | 23 | 22 | 21 | 0.155 | 3.4 | 2.8 | 0.8 | - | 1.41 | 0.106 | 0.08 | - | 0.10 | 0.004 | 2.03 | Remainder |
| B7 | 23 | 22 | 21 | 0.155 | 3.0 | 2.6 | 0.6 | - | 1.55 | 0.109 | 0.06 | 0.6 | 0.09 | 0.004 | 2.30 | Remainder |
| B8 | 23 | 22 | 21 | 0.070 | 4.0 | 2.6 | 1.4 | - | 1.42 | 0.115 | 0.06 | - | 0.09 | 0.004 | 2.30 | Remainder |
| B9 | 23 | 22 | 21 | 0.320 | 3.0 | 2.8 | 0.2 | 0.30 | 1.57 | 0.188 | 0.06 | - | 0.09 | 0.004 | 2.31 | Remainder |
| B10 | 23 | 22 | 21 | 0.155 | 3.4 | 3.0 | 1.8 | - | 1.72 | 0.209 | 0.18 | - | 0.09 | 0.004 | 2.11 | Remainder |
| B11 | 23 | 22 | 21 | 0.155 | 3.4 | 2.7 | 2.2 | - | 0.89 | 0.114 | 0.06 | - | 0.09 | 0.004 | 2.30 | Remainder |
| B12 | 23 | 22 | 21 | 0.280 | 3.4 | 2.6 | 0.8 | - | 1.38 | 0.305 | 0.06 | 0.5 | 0.09 | 0.004 | 2.29 | Remainder |
| B13 | 23 | 22 | 21 | 0.080 | 3.4 | 2.1 | 0.5 | 0.30 | 1.00 | 0.222 | 0.10 | - | 0.09 | 0.004 | 2.28 | Remainder |
| B14 | 23 | 22 | 21 | 0.275 | 3.4 | 2.7 | 1.4 | - | 1.04 | 0.102 | 0.08 | - | 0.09 | 0.004 | 2.30 | Remainder |
| B15 | 23 | 22 | 21 | 0.080 | 3.4 | 2.6 | 0.8 | - | 1.01 | 0.131 | 0.06 | - | 0.09 | 0.004 | 2.30 | Remainder |
| B16 | 23 | 22 | 21 | 0.050 | 3.4 | 2.4 | 0.8 | - | 1.07 | 0.110 | 0.06 | - | 0.09 | 0.004 | 2.29 | Remainder |
| B17 | 23 | 22 | 21 | 0.100 | 3.4 | 1.9 | 2.6 | - | 1.05 | 0.113 | 0.06 | - | 0.09 | 0.004 | 2.30 | Remainder |
| B18 | 23 | 22 | 21 | 0.155 | 3.4 | 3.3 | 0.5 | - | 1.83 | 0.140 | 0.06 | - | 0.09 | 0.004 | 2.28 | Remainder |
| B19 | 23 | 22 | 21 | 0.420 | 3.4 | 2.8 | 0.9 | 0.60 | 1.05 | 0.114 | 0.06 | - | 0.09 | 0.004 | 2.28 | Remainder |
| B20 | 23 | 22 | 21 | 0.275 | 3.4 | 2.6 | 0.8 | - | 0.99 | 0.098 | 0.06 | - | 0.09 | 0.004 | 2.30 | Remainder |
| B21 | 23 | 22 | 21 | 0.160 | 3.4 | 2.6 | 0.8 | - | 0.83 | 0.112 | 0.06 | - | 0.09 | 0.004 | 2.29 | Remainder |
| B22 | 23 | 22 | 21 | 0.155 | 5.5 | 2.6 | 0.8 | - | 1.02 | 0.076 | 0.06 | - | 0.09 | 0.004 | 2.30 | Remainder |
| B23 | 23 | 22 | 21 | 0.250 | 3.4 | 2.6 | 0.8 | - | 0.76 | 0.132 | 0.06 | - | 0.09 | 0.004 | 1.95 | Remainder |

(continued)

| Coating flux number | Chemical composition (in mass percent) of coating flux | | | | | | | | | | | | | | | |
|---|---|---|---|---|---|---|---|---|---|---|---|---|---|---|---|---|
| | CaO | $CO_2$ | $CaF_2$ | C | Si | Mn | Cr | Mo | V | Nb | B | W | Al | Ti | MgO | Others |
| B24 | 23 | 22 | 21 | 0.260 | 3.4 | 2.6 | 0.8 | - | 1.36 | 0.344 | 0.22 | - | 0.09 | 0.004 | 2.27 | Remainder |

*Others: including SrO and $BaF_2$

[Table 8]

| Test number | Coating flux number | Heat input condition | Core wire type | Preheating/ interpass temperature (°C) | Chemical composition** (in mass percent) of weld metal | | | | | | | | | | | | | | | A value |
|---|---|---|---|---|---|---|---|---|---|---|---|---|---|---|---|---|---|---|---|---|
| | | | | | C | Si | Mn | Cr | Mo | V | Nb | N | O | Cu | Ni | B | W | Al | Ti | |
| 50 | B1 | vii | a | 220 | 0.09 | 0.30 | 0.94 | 2.34 | 1.02 | 0.28 | 0.019 | 0.013 | 0.033 | 0.03 | 0.03 | 0.0013 | <0.01 | <0.01 | <0.002 | 4.1 |
| 51 | B2 | vii | a | 220 | 0.11 | 0.29 | 0.92 | 2.21 | 1.01 | 0.29 | 0.018 | 0.014 | 0.031 | 0.03 | 0.03 | 0.0013 | <0.01 | <0.01 | <0.002 | 4.5 |
| 52 | B3 | vii | a | 220 | 0.10 | 0.29 | 0.91 | 2.09 | 1.01 | 0.31 | 0.018 | 0.013 | 0.032 | 0.03 | 0.04 | 0.0013 | <0.01 | <0.01 | <0.002 | 4.3 |
| 53 | 84 | vii | a | 190 | 0.08 | 0.29 | 0.81 | 2.36 | 1.00 | 0.28 | 0.018 | 0.017 | 0.033 | 0.03 | 0.03 | 0.0012 | <0.01 | <0.01 | <0.002 | 3.6 |
| 54 | B5 | viii | a | 210 | 0.09 | 0.31 | 0.82 | 2.51 | 1.08 | 0.27 | 0.022 | 0.015 | 0.035 | 0.04 | 0.04 | 0.0013 | <0.01 | <0.01 | <0.002 | 4.6 |
| 55 | B6 | viii | a | 220 | 0.10 | 0.28 | 1.16 | 2.35 | 1.01 | 0.38 | 0.013 | 0.013 | 0.036 | 0.03 | 0.03 | 0.0020 | <0.01 | <0.01 | <0.002 | 4.6 |
| 56 | B7 | ix | a | 240 | 0.09 | 0.21 | 0.89 | 2.24 | 0.95 | 0.42 | 0.015 | 0.014 | 0.031 | 0.04 | 0.03 | 0.0011 | 0.21 | <0.01 | <0.002 | 4.6 |
| 57 | B8 | viii | a | 220 | 0.06 | 0.45 | 0.93 | 2.49 | 1.01 | 0.37 | 0.018 | 0.015 | 0.03 | 0.03 | 0.03 | 0.0014 | <0.01 | <0.01 | <0.002 | 2.2 |
| 58 | B9 | viii | a | 210 | 0.14 | 0.19 | 1.13 | 2.11 | 1.12 | 0.44 | 0.027 | 0.015 | 0.024 | 0.05 | 0.03 | 0.0013 | <0.01 | <0.01 | <0.002 | 4.8 |
| 59 | B10 | viii | a | 200 | 0.09 | 0.29 | 1.21 | 2.75 | 1.06 | 0.48 | 0.033 | 0.013 | 0.029 | 0.03 | 0.03 | 0.0041 | <0.01 | <0.01 | <0.002 | 2.2 |
| 60 | B11 | ix | a | 200 | 0.10 | 0.29 | 1.05 | 2.91 | 1.05 | 0.26 | 0.018 | 0.014 | 0.032 | 0.03 | 0.04 | 0.0013 | <0.01 | <0.01 | <0.002 | 4.7 |
| 61 | B12 | vii | a | 210 | 0.13 | 0.30 | 0.92 | 2.34 | 1.00 | 0.36 | 0.047 | 0.016 | 0.03 | 0.03 | 0.04 | 0.0013 | 0.15 | <0.01 | <0.002 | 4.2 |
| 62 | B13 | viii | a | 200 | 0.07 | 0.29 | 0.66 | 2.19 | 1.16 | 0.28 | 0.036 | 0.015 | 0.037 | 0.04 | 0.03 | 0.0025 | <0.01 | <0.01 | <0.002 | 4.6 |
| 63 | B14 | viii | a | 210 | 0.12 | 0.29 | 1.02 | 2.44 | 0.99 | 0.27 | 0.01 | 0.015 | 0.036 | 0.03 | 0.03 | 0.0019 | <0.01 | <0.01 | <0.002 | 4.9 |
| 64 | B1 | viii | a | 180 | 0.09 | 0.29 | 0.93 | 2.35 | 1.01 | 0.27 | 0.018 | 0.014 | 0.03 | 0.03 | 0.03 | 0.0012 | <0.01 | <0.01 | <0.002 | 5.2 |
| 65 | B1 | viii | a | 260 | 0.09 | 0.28 | 0.92 | 2.35 | 1.01 | 0.28 | 0.019 | 0.013 | 0.033 | 0.03 | 0.04 | 0.0013 | <0.01 | <0.01 | <0.002 | 5.1 |
| 66 | B1 | vi | a | 220 | 0.10 | 0.30 | 0.93 | 2.34 | 1.03 | 0.27 | 0.018 | 0.014 | 0.03 | 0.03 | 0.03 | 0.0013 | <0.01 | <0.01 | <0.002 | 5.2 |
| 67 | B1 | x | a | 220 | 0.09 | 0.29 | 0.91 | 2.36 | 1.00 | 0.26 | 0.019 | 0.014 | 0.042 | 0.03 | 0.03 | 0.0011 | <0.01 | <0.01 | <0.002 | 5.3 |
| 68 | B15 | vii | b | 210 | 0.08 | 0.29 | 0.92 | 2.33 | 1.17 | 0.29 | 0.022 | 0.014 | 0.036 | 0.05 | 0.03 | 0.0011 | <0.01 | <0.01 | <0.002 | 5.3 |
| 69 | B16 | vii | a | 220 | 0.04 | 0.28 | 0.81 | 2.35 | 1.01 | 0.33 | 0.016 | 0.014 | 0.045 | 0.03 | 0.03 | 0.0013 | <0.01 | <0.01 | <0.002 | 1.8 |
| 70 | B17 | viii | a | 200 | 0.09 | 0.30 | 0.55 | 3.05 | 1.05 | 0.33 | 0.018 | 0.016 | 0.044 | 0.03 | 0.03 | 0.0013 | <0.01 | <0.01 | <0.002 | 2.8 |
| 71 | B18 | viii | a | 200 | 0.10 | 0.29 | 1.35 | 2.19 | 1.00 | 0.51 | 0.024 | 0.014 | 0.031 | 0.04 | 0.03 | 0.0013 | <0.01 | <0.01 | <0.002 | 2.6 |

(continued)

| Test number | Welding wire number | Heat input condition | Flux type | Preheating/ interpass temperature (°C) | Chemical composition** (in mass percent) of weld metal | | | | | | | | | | | | | | | A value |
|---|---|---|---|---|---|---|---|---|---|---|---|---|---|---|---|---|---|---|---|---|
| | | | | | C | Si | Mn | Cr | Mo | V | Nb | N | O | Cu | Ni | B | W | Al | Ti | |
| 72 | B19 | vii | a | 210 | 0.16 | 0.29 | 1.13 | 2.44 | 1.24 | 0.31 | 0.018 | 0.016 | 0.023 | 0.03 | 0.04 | 0.0013 | <0.01 | <0.01 | <0.002 | 5.6 |
| 73 | B20 | viii | a | 230 | 0.12 | 0.31 | 0.89 | 2.40 | 1.01 | 0.27 | 0.011 | 0.014 | 0.033 | 0.04 | 0.03 | 0.0014 | <0.01 | <0.01 | <0.002 | 5.3 |
| 74 | B21 | viii | a | 230 | 0.10 | 0.29 | 0.92 | 2.35 | 1.04 | 0.26 | 0.016 | 0.014 | 0.033 | 0.03 | 0.05 | 0.0014 | <0.01 | <0.01 | <0.002 | 5.1 |
| 75 | B22 | viii | a | 210 | 0.09 | 0.52 | 0.93 | 2.35 | 1.04 | 0.28 | 0.009 | 0.014 | 0.028 | 0.03 | 0.03 | 0.0014 | <0.01 | <0.01 | <0.002 | 5.1 |
| 76 | B23 | viii | a | 200 | 0.11 | 0.29 | 0.93 | 2.37 | 1.01 | 0.23 | 0.022 | 0.017 | 0.041 | 0.03 | 0.03 | 0.0013 | <0.01 | <0.01 | <0.002 | 6.0 |
| 77 | B24 | vii | a | 200 | 0.11 | 0.30 | 0.92 | 2.34 | 1.03 | 0.35 | 0.052 | 0.017 | 0.034 | 0.03 | 0.03 | 0.0051 | <0.01 | <0.01 | <0.002 | 4.4 |
| **Remainder: iron and inevitable impurities | | | | | | | | | | | | | | | | | | | | |

[Table 9]

| Test number | Number density (per square millimeter) of oxide particles of greater than 1 $\mu$m | Number density (per square millimeter) of oxide particles of greater than 2 $\mu$m | TS [MPa] | vTr$_{54}$ | vTr'$_{54}$ | $\Delta$ vTr$_{54}$. | Stress-relief cracking resistance |
|---|---|---|---|---|---|---|---|
| 50 | 1047 | 27 | 641 | -53 | -50 | 3 | ○ |
| 51 | 980 | 27 | 652 | -53 | -50 | 3 | ○ |
| 52 | 1088 | 14 | 651 | -54 | -51 | 3 | ○ |
| 53 | 1203 | 20 | 634 | -54 | -51 | 3 | ○ |
| 54 | 1270 | 27 | 629 | -54 | -50 | 4 | ○ |
| 55 | 1257 | 88 | 652 | -54 | -50 | 4 | ○ |
| 56 | 1007 | 14 | 631 | -55 | -51 | 4 | ○ |
| 57 | 1027 | 20 | 618 | -52 | -51 | 1 | ○ |
| 58 | 480 | 0 | 704 | -53 | -50 | 3 | ○ |
| 59 | 1047 | 47 | 661 | -51 | -51 | 0 | ○ |
| 60 | 1122 | 14 | 617 | -53 | -50 | 3 | ○ |
| 61 | 1007 | 7 | 681 | -52 | -50 | 2 | ○ |
| 62 | 1345 | 34 | 612 | -55 | -51 | 4 | ○ |
| 63 | 1277 | 41 | 618 | -57 | -52 | 5 | ○ |
| 64 | 1014 | 14 | 641 | -52 | -46 | 6 | ○ |
| 65 | 1088 | 20 | 629 | -54 | -46 | 8 | ○ |
| 66 | 1061 | 20 | 652 | -53 | -46 | 7 | ○ |
| 67 | 1297 | 47 | 615 | -53 | -45 | 8 | ○ |
| 68 | 1338 | 34 | 638 | -51 | -42 | 9 | ○ |
| 69 | 1385 | 54 | 594 | -58 | -58 | 0 | ○ |
| 70 | 1405 | 47 | 595 | -36 | -33 | 3 | × |
| 71 | 1061 | 27 | 658 | -36 | -28 | 8 | ○ |
| 72 | 277 | 0 | 732 | -18 | -8 | 10 | ○ |
| 73 | 1081 | 20 | 618 | -58 | -50 | 8 | ○ |
| 74 | 1196 | 20 | 617 | -57 | -50 | 7 | ○ |
| 75 | 1007 | 0 | 587 | -45 | -38 | 7 | ○ |
| 76 | 1270 | 108 | 595 | -48 | -40 | 8 | ○ |
| 77 | 1014 | 27 | 662 | -41 | -37 | 4 | × |

Tables 7 to 9 indicate as follows, in which numbers (Nos.) are the test numbers given in Tables 8 and 9. Nos. 50 to 63 were samples satisfying the conditions specified in the present invention and gave weld metals which exhibited satisfactory temper embrittlement resistance ($\Delta$vTr$_{54}$) and excelled in properties such as toughness, cracking resistance, and strength.

By contrast, Nos. 64 to 77 were samples not satisfying at least one of the conditions specified in the present invention and were inferior in at least one of the properties. Specifically, No. 64 gave a weld metal having a high A value due to a preheating/interpass temperature lower than the appropriate range. This weld metal was inferior in toughness (vTr'$_{54}$) and temper embrittlement resistance. No. 65 gave a weld metal having a high A value due to a preheating/interpass temperature higher than the appropriate range. This weld metal was inferior in toughness (vTr'$_{54}$) and temper embrittlement resistance (ΔvTr$_{54}$).

No. 66 gave a weld metal having a high A value due to the heat input condition (heat input of 2.1 kJ/mm). This weld metal was inferior in toughness (vTr'$_{54}$) and temper embrittlement resistance (ΔvTr$_{54}$). No. 67 gave a weld metal having a high A value due to the heat input condition (heat input of 3.2 kJ/mm). This weld metal was inferior in toughness (vTr'$_{54}$) and temper embrittlement resistance (ΔvTr$_{54}$).

No. 68 employed a core wire having an inappropriate chemical composition b and gave a weld metal having a high A value. This weld metal was inferior in toughness (vTr'$_{54}$) and temper embrittlement resistance (ΔvTr$_{54}$). No. 69 gave a weld metal having an insufficient C content and exhibited an insufficient strength No. 70 gave a weld metal having an insufficient Mn content and an excessively high Cr content. This weld metal had an insufficient strength and was inferior in toughness (vTr$_{54}$ and vTr'$_{54}$) and cracking resistance.

No. 71 gave a weld metal having excessively high Mn and V contents. This weld metal was inferior in toughness (vTr$_{54}$ and vTr'$_{54}$) and temper embrittlement resistance (ΔvTr$_{54}$). No. 72 gave a weld metal having excessively high C and Mo contents and a high A value. This weld metal was inferior in toughness (vTr$_{54}$ and vTr'$_{54}$) and temper embrittlement resistance (ΔvTr$_{54}$).

No. 73 gave a weld metal having a high A value due to an excessively low Nb content of the coating flux. This weld metal had poor temper embrittlement resistance (ΔvTr$_{54}$). No. 74 gave a weld metal having a high A value due to an excessively low V content of the coating flux. This weld metal had poor temper embrittlement resistance (ΔvTr$_{54}$). No. 75 gave a weld metal having an excessively high Si content, an excessively low Nb content, and a high A value. This weld metal had an insufficient strength and was inferior in toughness (vTr$_{54}$ and vTr'$_{54}$ and temper embrittlement resistance (ΔvTr$_{54}$).

No. 76 gave a weld metal having an insufficient V content and a high A value and suffering from larger amounts of coarse oxide particles due to an insufficient MgO content of the coating flux. This weld metal had an insufficient strength and was inferior in toughness (vTr$_{54}$ and vTr'$_{54}$) and temper embrittlement resistance (ΔvTr$_{54}$). No. 77 gave a weld metal having excessively high Nb and B contents. This weld metal was inferior in toughness (vTr$_{54}$ and vTr'$_{54}$) and stress-relief cracking resistance.

While the present invention has been described in detail with reference to preferred embodiments thereof with a certain degree of particularity, it will be understood by those skilled in the art that various changes and modifications are possible without departing from the spirit and scope of the invention.

The present application is based on Japanese Patent Application No. 2011-054648 filed on March 11, 2011, the entire contents of which are incorporated herein by reference.

Industrial Applicability

Weld metals according to embodiments of the present invention are useful in high-strength Cr-Mo steels for use typically in steam boilers and chemical reactors.

**Claims**

1. A weld metal highly resistant to temper embrittlement, comprising:

    C in a content of 0.05% to 0.15%;
    Si in a content of 0.1% to 0.50%;
    Mn in a content of 0.6% to 1.30%;
    Cr in a content of 1.8% to 3.0%;
    Mo in a content of 0.80% to 1.20%;
    V in a content of 0.25% to 0.50%;
    Nb in a content of 0.010% to 0.050%;
    N in a content of greater than 0% to 0.025%; and
    O in a content of 0.020% to 0.060%,

in mass percent,
wherein:

    the weld metal further comprises iron and inevitable impurities;

oxide particles each having an equivalent circle diameter of greater than 1 μm are present in a number density of 2000 or less per square millimeter;

oxide particles each having an equivalent circle diameter of greater than 2 μm are present in a number density of 100 or less per square millimeter; and

an A value as specified by Formula (1) is 5.0 or less, Formula (1) expressed as follows:

$$A\ value = (100 \times [C] - 6 \times [insol.Cr] - 2 \times [insol.Mo] - 24 \times [insol.V] - 13 \times [insol.Nb]) \times ([Mo] - [insol.Mo]) \qquad (1)$$

where [insol.Cr], [insol.Mo], [insol.Nb], and [insol.V] are contents (in mass percent) of Cr, Mo, Nb, and V, respectively, each present as a compound in the weld metal after a stress relief heat treatment; and [C] and [Mo] are contents (in mass percent) of C and Mo, respectively, in the weld metal.

2. The weld metal of claim 1, further comprising, as an additional element or elements, at least one selected from the group consisting of

Cu in a content of greater than 0% to 1.0%;
Ni in a content of greater than 0% to 1.0%;
B in a content of greater than 0% to 0.0050%;
W in a content of greater than 0% to 0.50%;
Al in a content of greater than 0% to 0.030%; and
Ti in a content of greater than 0% to 0.020%.

3. A welded structure comprising the weld metal of one of claims 1 and 2.

# FIG.1

593×1
*1 \ 538×15
*1 \ 524×24
*1 \ 496×60
*2 \ 468×100(℃×h)

*1:5.6℃/h
*2:2.8℃/h

≤50℃/h

≤28℃/h

300℃

# FIG.2

10

(IN MILLIMETER)

# FIG.3

T/2

T: THICKNESS

# FIG.4A

ABOUT 0.5mm

# FIG.4B

15mm

10mm IN DIAMETER

5mm IN DIAMETER

SLIT :0.5mm

0.4mm

0.5mm

R=0.2mm

# FIG.4C

OBSERVATION PLANE 1

OBSERVATION PLANE 2

OBSERVATION PLANE 3

WELDING DIRECTION

## INTERNATIONAL SEARCH REPORT

| International application No. |
| --- |
| PCT/JP2012/055595 |

### A. CLASSIFICATION OF SUBJECT MATTER
*B23K35/30*(2006.01)i, *B23K9/23*(2006.01)n, *B23K35/365*(2006.01)n, *C22C38/00* (2006.01)n, *C22C38/50*(2006.01)n

According to International Patent Classification (IPC) or to both national classification and IPC

### B. FIELDS SEARCHED

Minimum documentation searched (classification system followed by classification symbols)
B23K35/30, B23K9/23, B23K35/365, C22C38/00, C22C38/50

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2008-229718 A (Kobe Steel, Ltd.), 02 October 2008 (02.10.2008), claims; paragraph [0036]; tables 1 to 6 & US 2008/0199346 A1 & EP 1958729 A1 & CN 101249592 A & KR 10-2008-0077335 A | 1-3 |
| A | JP 2007-090399 A (Nippon Steel Corp.), 12 April 2007 (12.04.2007), tables 1 to 6 (Family: none) | 1-3 |
| A | JP 2009-106949 A (Kobe Steel, Ltd.), 21 May 2009 (21.05.2009), tables 1 to 3 (Family: none) | 1-3 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 May, 2012 (10.05.12) | 22 May, 2012 (22.05.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/055595

C (Continuation).   DOCUMENTS CONSIDERED TO BE RELEVANT

| Category* | Citation of document, with indication, where appropriate, of the relevant passages | Relevant to claim No. |
|---|---|---|
| A | JP 09-192881 A  (Kobe Steel, Ltd.),<br>29 July 1997 (29.07.1997),<br>tables 1 to 30<br>& FR 2740715 A1        & IT 96502284 A<br>& KR 10-0237320 B | 1-3 |

Form PCT/ISA/210 (continuation of second sheet) (July 2009)

**EP 2 684 638 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H02182378 A
- JP H02220797 A
- JP H06328292 A
- JP H08150478 A
- JP 2000301378 A
- JP 2002263883 A
- JP 2008229718 A
- JP 2009106949 A
- JP 2011054648 A